# EUROPÄISCHE PATENTSCHRIFT

(11) **EP 3 038 913 B1**
(45) Veröffentlichungstag und Bekanntmachung des Hinweises auf die Patenterteilung: **24.04.2019**
(21) Anmeldenummer: 14756074.2
(22) Anmeldetag: 29.08.2014
(51) Int. Cl.: B64C 29/00

(54) **SENKRECHTSTARTFÄHIGES FLUGGERÄT**
VERTICAL TAKE-OFF AND LANDING AIRCRAFT
VÉHICULE AÉRIEN POUR DÉCOLLAGE ET ATTERRISSAGE VERTICAL

(30) Priorität: 29.08.2013 DE 102013109392
(43) Veröffentlichungstag der Anmeldung: 06.07.2016
(73) Patentinhaber: Airbus Defence and Space GmbH, 82024 Taufkirchen (DE)
(72) Erfinder: JUDAS, Michael, 80331 München (DE); STRATENBERG, Friederike, 85051 Ingolstadt (DE); VAN TOOR, Jan, 81739 München (DE); SCHOLZ, Werner, 73275 Ohmden (DE); KARRAIS, Berthold, 78736 Epfendorf (DE); STANGL, Wolfgang, 80798 München (DE)
(74) Vertreter: LKGLOBAL Lorenz & Kopf PartG mbB Patentanwälte
(86) Internationale Anmeldenummer: PCT/EP2014/068410
(87) Internationale Veröffentlichungsnummer: WO 2015/028627

(56) Entgegenhaltungen:
- WO-A1-2004/012993
- WO-A2-2006/113877
- US-A- 3 181 810
- US-A1- 2003 062 443
- US-A1- 2004 245 374
- US-A1- 2011 042 508
- US-A1- 2013 020 429

## Beschreibung

Die vorliegende Anmeldung beansprucht die Priorität der deutschen Patentanmeldung Nr. 10 2013 109 392.2, eingereicht am 29. August 2013.

### GEBIET DER ERFINDUNG

Die vorliegende Erfindung betrifft ein senkrechtstartfähiges Fluggerät ähnlich beispielsweise einem Tricopter oder einem Quadcopter.

### HINTERGRUND DER ERFINDUNG

Für viele Anwendungen ist es wünschenswert, ein Fluggerät zur Verfügung zu haben, welches von einer minimal kleinen Fläche aus starten kann und somit beispielsweise keinen speziellen großflächigen Flughafen benötigt. Ferner wird für bestimmte Einsatzzwecke ein Fluggerät benötigt, welches agil ist und präzise manövriert werden kann und welches vorzugsweise auf der Stelle schweben und dabei gute Schwebeflugeigenschaften aufweisen kann.

Beispielsweise werden Fluggeräte zur Luftüberwachung und -aufklärung eingesetzt, welche über einem interessierenden Ziel schweben und dabei beispielsweise Luftbilder aufnehmen können sollen. In einer alternativen Anwendung kann ein senkrechtstartfähiges Fluggerät, manchmal auch als VTOL (Vertical Take-Off and Landing) bezeichnet, dazu eingesetzt werden, für Menschen oder sonstige Maschinen schwer zugängliche Gebiete anzufliegen, beispielsweise im Rahmen von Katastrophenschutzeinsätzen, um zum Beispiel Güter wie Werkzeuge, Lebensmittel oder Medikamente in solche Gebiete transportieren zu können.

Unter anderem für solche Einsätze wurden Fluggeräte entwickelt, bei denen wenigstens drei, vorzugsweise vier oder mehr mit einem Propeller und einem diesen antreibenden Motor ausgestattete Rotoren jeweils für einen im Wesentlichen vertikal nach oben gerichteten Schub sorgen, um auf diese Weise das Fluggerät senkrecht abheben bzw. schweben lassen zu können. Ein mit vier solchen Rotoren versehenes Fluggerät wird auch als Quadcopter, Quadrocopter, Quadricopter, Quadrotor oder Schwebeplattform bezeichnet. Allgemein werden solche Fluggeräte mit mehr als drei für Auftrieb sorgenden Rotoren als Multicopter bezeichnet, wobei neben Quadcoptern auch Varianten mit drei Rotoren (Tricopter), sechs Rotoren (Hexacopter) oder acht Rotoren (Octocopter) gebräuchlich sind. Derartige Fluggeräte werden meist unbemannt betrieben und können dementsprechend klein sein. Teilweise werden diese Fluggeräte auch als Drohnen bezeichnet.

Durch leichte Neigung des gesamten Fluggeräts bzw. eines oder mehrerer Rotoren aus der Horizontalen heraus kann bei solchen Fluggeräten auch für einen gewissen Vortrieb gesorgt werden, in dem ein von den Rotoren erzeugter Schub aus der Vertikalen heraus geneigt wird. Allerdings sind auf diese Weise erreichbare Reisefluggeschwindigkeiten aufgrund von bei diesem Typ von Fluggerät auftretenden physikalischen Randbedingungen auf relativ geringe Geschwindigkeiten von typischerweise unter 200 km/h, häufig auch unter 100 km/h, begrenzt. Eine solche Geschwindigkeitsbegrenzung resultiert beispielsweise aus der physikalischen Randbedingung, dass die für den Auftrieb eingesetzten Propeller bei hohen Rotationsgeschwindigkeiten betrieben werden und daher ein sich nach vorne in Richtung der Flugrichtung des Fluggeräts bewegendes Propellerblatt sich bereits bei verhältnismäßig niedrigen Reisefluggeschwindigkeiten zumindest an seinen Propellerblattspitzen fast mit Schallgeschwindigkeit bewegen muss, wodurch hohe Luftwiderstände und starke Geräusche generiert werden.

Herkömmliche Multicopter haben daher, ähnlich wie Hubschraubern, bei denen nur einziger Rotor für den nötigen Auftrieb sorgt und eine komplizierte Rotormechanik zusammen mit einem Heckrotor für ein Manövrieren des Hubschraubers eingesetzt werden kann, zwar gute Schwebeflugeigenschaften, erreichen üblicherweise aber nur relativ geringe Reisefluggeschwindigkeiten.

In der KR 10 2012 006 05 90 A wird ein Quadrocopter beschrieben, der vertikal starten und landen kann und bei dem eine Schubrichtung von Propellern variiert werden kann, um auf diese Weise nicht nur für einen Auftrieb, sondern auch für einen Vortrieb für den Quadrocopter sorgen zu können. In der WO 2006/113877 A2 wird ein Luftfahrzeug mit einer Vielzahl von elektrischer Rotoren offenbart, welches in der Lage ist, senkrecht zu starten und zu landen. Aus der US 2004/0245374 A1 ist ein senkrechtstartendes Luftfahrzeug mit einem Rumpf, zwei Flügeln und mehreren Stabilisatoren bekannt. Die US 2013/0020429 A1 beschreibt ein Luftfahrzeug mit Tandemflügeln und einer Mehrzahl von Hub-Rotoren, welches in der Lage ist, Start und Landung in vertikaler Richtung durchzuführen. In der US 2011/0042508 A1 findet sich die Lehre eines Luftfahrzeugs zum senkrechten Starten und Landen, wobei für die horizontale wie vertikale Bewegung die gleichen Schubeinheiten verwendet werden.

### ZUSAMMENFASSUNG DER ERFINDUNG

Es kann als eine der vorliegenden Erfindung zugrunde liegende Aufgabe angesehen werden, ein Fluggerät bereitzustellen, das sowohl gute Schwebeflugeigenschaften als auch hohe Reisefluggeschwindigkeiten ermöglicht.

Eine solche Aufgabe kann mit einem Fluggerät gemäß dem Hauptanspruch gelöst werden. Vorteilhafte Ausführungsformen der Erfindung sind in den abhängigen Ansprüchen sowie der nachfolgenden Beschreibung definiert.

Gemäß einem Aspekt der vorliegenden Erfindung wird ein Fluggerät vorgeschlagen, welches eine Tragestruktur, eine Flügelstruktur, wenigstens drei Hubrotoren und wenigstens einen Schubantrieb aufweist. Die Flügelstruktur ist dabei an der Tragestruktur befestigt. Die Flügelstruktur kann auch ein Teil der Tragestruktur des Flugzeugs sein. Die Flügelstruktur ist dazu ausgebildet, bei einer Horizontalbewegung des Fluggeräts eine Auftriebskraft für das Fluggerät zu erzeugen, und weist hierfür wenigstens eine Tragfläche auf, die mit einem einen dynamischen Auftrieb erzeugenden Profil versehen ist, wobei die wenigstens eine Tragfläche der Flügelstruktur derart dimensioniert ist, dass sie bei von dem Fluggerät zu erzielenden Reisefluggeschwindigkeiten alleine für einen ausreichenden Auftrieb für das Fluggerät sorgen kann. Jeder der Hubrotoren ist an der Tragestruktur befestigt. Jeder Hubrotor weist dabei einen Propeller auf und ist dazu ausgebildet, durch Rotieren des Propellers eine in Vertikalrichtung wirkende Auftriebskraft für das Fluggerät zu erzeugen. Der Schubantrieb ist dazu ausgebildet, eine in Horizontalrichtung wirkende Schubkraft auf die Tragestruktur zu erzeugen. Der Propeller weist exakt zwei Propellerblätter auf, wobei die Hubrotoren dazu ausgebildet sind, jeweilige Propellerblätter eines Hubrotors in einer Position relativ zu der Tragestruktur zu arretieren, wobei der Propeller derart in einer Rotationsposition arretierbar ist, dass sich der Propeller parallel zu einer Längsrichtung des Fluggeräts erstreckt.

Kurz zusammengefasst kann eine der Erfindung zugrunde liegende Idee unter anderem darin gesehen werden, ein Fluggerät in Form eines Multicopters einerseits mit wenigstens drei Hubrotoren auszustatten, die einen vertikalen Schub erzeugen, mithilfe dessen das Fluggerät vertikal starten und landen sowie schweben kann, und zusätzlich andererseits einen Schubantrieb vorzusehen, der einen in Horizontalrichtung wirkenden Schub erzeugen kann, so dass das Fluggerät unabhängig von den Hubrotoren auf eine hohe Reisefluggeschwindigkeit beschleunigt werden kann, nachdem die Rotoren abgestellt wurden. Zusätzlich wird das Fluggerät mit einer Flügelstruktur versehen, bei der wenigstens eine Tragfläche für dynamischen Auftrieb sorgt, wenn das Fluggerät auf eine ausreichend hohe Reisefluggeschwindigkeit beschleunigt wurde.

Die Tragfläche bzw. die Tragflächen der Flügelstruktur sind dabei vorzugsweise derart dimensioniert, dass sie bei von dem Fluggerät zu erzielenden Reisefluggeschwindigkeiten alleine für einen ausreichenden Auftrieb für das Fluggerät sorgen können und somit bei Reisefluggeschwindigkeit auf einen durch die Hubrotoren erzeugten Auftrieb verzichtet werden kann.

Die Tragflächen können zum Beispiel schwenkbar oder verdrehbar an der Tragestruktur bzw. an einem Rumpf angebracht sein, so dass sie sich während eines Schwebeflugzustandes bzw. Schwebefluges in einem verschwenkten Zustand und während eines Reisefluges in einem eingeschwenkten Zustand befinden. Dabei wird durch das Verschwenken der Tragflächen die Pfeilung der Flügelstruktur erhöht und durch das Einschwenken die Pfeilung verkleinert. Die Pfeilung beschreibt dabei einen Winkel zwischen einer Vorderkante der jeweiligen Tragfläche und einer Querachse des Fluggerätes. In Bezug zur Flugrichtung kann zwischen negativer Pfeilung, das heißt nach vorn gepfeilten Tragflächen, und positiver Pfeilung, das heißt nach hinten gepfeilten Tragflächen, unterschieden werden. Dieser Zusammenhang wird in der Figurenbeschreibung noch eingehend erläutert werden.

Es können ferner Konfigurationen des Fluggerätes mit drei Tragflächen oder Tragflächenpaaren vorgesehen sein. Die Tragflächen können auch über Verbindungsstrukturen oder Verbindungselemente miteinander verbunden sein, wie dies beispielsweise bei Ringflüglern der Fall ist. An den Verbindungsstrukturen oder Verbindungselementen können dabei über Ausleger bzw. Gondeln die Propeller befestigt sein. Bevorzugterweise sind die Propeller an den Tragflächen, der Tragestruktur, Auslegern, Verbindungsstrukturen, Verbindungselementen oder Gondeln befestigt.

Ein erfindungsgemäßes Fluggerät, das mit einer Kombination aus wenigstens drei Hubrotoren und wenigstens einem Schubantrieb sowie einer geeignet ausgebildeten Flügelstruktur versehen ist, kann sowohl die gewünschten guten Schwebeflugeigenschaften aufweisen als auch hohe Reisefluggeschwindigkeiten erreichen. Die Hubrotoren können dabei zum Beispiel beim Starten oder Landen oder im Schwebeflug, das heißt bei fehlender oder geringer Horizontalgeschwindigkeit des Fluggeräts, für einen nötigen Auftrieb sorgen. Unabhängig von den Hubrotoren kann der Schubantrieb das Fluggerät in Horizontalrichtung beschleunigen, wobei bei ausreichend hohen Horizontalgeschwindigkeiten ein durch die wenigstens eine Tragfläche der Flügelstruktur bewirkter dynamischer Auftrieb ausreichend hoch sein kann, um das Fluggerät zu tragen.

Die einzelnen Komponenten des vorgeschlagenen Fluggeräts können dabei verhältnismäßig einfach ausgebildet sein und gesteuert werden. Insbesondere können die Hubrotoren derart ausgestaltet sein, dass eine Rotationsebene, in der Rotorblätter eines Hubrotors rotieren, in Relation zu einer von einem Motor angetriebenen Rotorachse des Hubrotors stationär ist.

Mit anderen Worten können die Hubrotoren des Fluggeräts mechanisch einfach aufgebaut sein und beispielsweise ein einfacher Propeller direkt mit einer von einem Motor angetriebenen Achse gekoppelt sein. Es ist insbesondere nicht notwendig, Rotorblätter des Hubrotors mithilfe einer komplizierten Mechanik wie beispielsweise einer Taumelscheibe wie bei einem Hubschrauber mit einer motorgetriebenen Rotorachse zu verbinden. Insbesondere ist es nicht notwendig, einen Anstellwinkel oder Neigungswinkel einzelner Rotorblätter während einer Rotorumdrehung zu verändern, um auch auf diese Weise für einen Vortrieb des Fluggeräts, ein Rollen, Nicken oder ein Gieren des Fluggeräts zu sorgen. Stattdessen kann bei dem vorgeschlagenen Fluggerät ein Vortrieb mithilfe des zusätzlichen Schubantriebs bewirkt werden. Ein Rollen, Nicken bzw. ein Gieren des Fluggeräts kann durch ein Variieren der von den im Allgemeinen wenigstens vier Hubrotoren jeweils erzeugten Auftriebskräfte bewirkt werden.

In einer besonders einfachen Ausgestaltung können die Propellerblätter eines Hubrotors starr mit der Rotorachse verbunden sein. Ein derart mit starren Blättern versehener Propeller weist keine beweglichen Teile auf. Er ist somit robust und erfordert beispielsweise keine Mechanik oder Steuerung, um eine variable Anordnung von Propellerblättern steuern zu können. Der Propeller kann insbesondere einstückig sein. Die von einem derart einfach aufgebauten Hubrotor erzeugte Auftriebskraft hängt hauptsächlich von der Rotationsgeschwindigkeit oder Drehzahl, mit der der Propeller betrieben wird, ab und kann somit einfach durch geeignetes Ansteuern des antreibenden Motors gesteuert werden.

Alternativ kann der Hubrotor komplexer ausgebildet sein und Propellerblätter des Hubrotors derart verschwenkbar mit der Rotorachse verbunden sein, dass eine Steigung der Propellerblätter variiert werden kann.

Mit anderen Worten kann ein Winkel, den die Propellerblätter mit der Rotationsebene, in der die Propellerblätter rotieren, einnehmen, variiert werden. Ein solches Variieren der Steigung der Propellerblätter kann dabei vorzugsweise für alle Propellerblätter gemeinsam bewirkt werden. Insbesondere kann ein Variieren der Steigung der Propellerblätter unabhängig von einer aktuellen Position der rotierenden Propellerblätter vorgenommen werden, das heißt, die Propellerblätter werden nicht wie mit einer Taumelscheibe bei einem Hubschrauber während einer Umdrehung in ihrer Steigung variiert, sondern die Steigung der Propellerblätter bleibt während einer Umdrehung weitgehend konstant. Ein solches verhältnismäßig langsames Variieren der Steigung der Propellerblätter kann einfach und mit einer robusten Mechanik bewirkt werden.

Durch Variieren der Steigung der Propellerblätter kann der Schub des Hubrotors und damit die von diesem bewirkte Auftriebskraft beeinflusst werden, ohne notwendigerweise eine Rotationsgeschwindigkeit, das heißt, eine Drehzahl, des Propellers verändern zu müssen. Ein solcher mit gemeinsam verschwenkbaren Propellerblättern versehener Hubpropeller wird auch als Verstellpropeller bezeichnet.

Grundsätzlich kann es genügen, das vorgeschlagene Fluggerät mit lediglich drei Hubrotoren auszustatten. Jeder der Hubrotoren sollte dabei separat ansteuerbar sein, das heißt, ein von einem der Hubrotoren bewirkter Schub sollte unabhängig von den anderen Hubrotoren variiert werden können. Die wenigstens drei Hubrotoren sind dabei an dem Fluggerät an Positionen befestigt, die gemeinsam eine Ebene eindeutig aufspannen, das heißt, die Hubrotoren sollten nicht entlang einer gemeinsamen Geraden linear hintereinander angeordnet sein. Durch geeignetes Ansteuern der drei Hubrotoren zur Erzeugung unterschiedlicher Auftriebskräfte kann die von den Hubrotoren aufgespannte Ebene und damit das gesamte Fluggerät verkippt werden.

Solange die Hubrotoren derart ausgerichtet sind, dass die Summe der von ihnen erzeugten Schübe im Wesentlichen senkrecht nach unten wirkt, kann das Fluggerät ortsfest schweben und durch Variation der Stärke dieses Gesamtschubes die Flughöhe des Fluggeräts variiert werden. Wenn ausgehend von einem solchen Schwebeflug der von einzelnen Hubrotoren erzeugte Schub verändert wird, kann dadurch bewirkt werden, dass der auf das Fluggerät wirkende Gesamtschub nicht mehr vertikal nach unten wirkt. Das Fluggerät kann dadurch nach vorne, nach hinten oder zu einer der Seiten verkippen und dabei vorwärts bzw. rückwärts an Fahrt aufnehmen bzw. anfangen zu rollen.

Durch eine Beschränkung auf lediglich drei Hubrotoren können bei dem vorgeschlagenen Fluggerät Bauteile und somit Gewicht eingespart werden. Allerdings ist es mit lediglich drei Hubrotoren im Allgemeinen schwierig, das Fluggerät um seine Hochachse drehen zu lassen, das heißt, gieren zu lassen.

Es kann daher vorteilhaft sein, das vorgeschlagene Fluggerät, ähnlich wie bei einem Quadcopter, mit wenigstens vier Hubrotoren auszustatten. Die vier Hubrotoren können dabei vorzugsweise unabhängig voneinander angesteuert werden. Da die Lage bzw. Neigung des Fluggeräts bereits durch den von lediglich drei Hubrotoren erzeugten Schub vorgegeben werden kann, eröffnet das Vorsehen eines zusätzlichen vierten Hubrotors die Möglichkeit, das Fluggerät auch gieren zu lassen. Das Fluggerät kann somit durch geeignetes Ansteuern der vier Hubrotoren in jede beliebige Lage und Flugrichtung gebracht werden. Ein solches Fluggerät mit vier oder mehr Hubrotoren kann zusätzlich zu guten Schwebeflugeigenschaften auch präzise und agil manövrierbar sein.

Das vorgeschlagene Fluggerät soll eine Tragestruktur und eine Flügelstruktur aufweisen. Die Tragestruktur soll dabei für eine strukturelle Festigkeit des Fluggeräts sorgen, so dass sowohl die Flügelstruktur als auch die Hubrotoren stabil an dem Fluggerät befestigt werden können. Die Flügelstruktur soll mithilfe von geeignet ausgebildeten Tragflächen für einen dynamischen Auftrieb sorgen können, wenn das Fluggerät eine ausreichend hohe Reisefluggeschwindigkeit annimmt.

Es wird darauf hingewiesen, dass die Tatsache, dass für die Tragestruktur und die Flügelstruktur zwei separate Begriffe verwendet werden, nicht bedeutet, dass die von der Tragestruktur und der Flügelstruktur zu bewirkenden Funktionen zwingend von separaten realen Strukturen bewirkt werden müssen. Beispielsweise können Funktionen der Tragestruktur und Funktionen der Flügelstruktur von unterschiedlichen Strukturkomponenten des vorgeschlagenen Fluggeräts oder aber auch von gleichen Strukturkomponenten des Fluggeräts bewirkt werden. Als Beispiel kann ein Flügel eines Fluggeräts gleichzeitig als einen dynamischen Auftrieb bewirkende Tragfläche und somit als Teil einer Flügelstruktur wirken als auch andere Komponenten des Fluggeräts mechanisch miteinander verbinden und somit als Teil einer Tragestruktur wirken. Beispielsweise kann der Flügel eine äußere Haut aufweisen, die ein Profil einer dadurch gebildeten Tragfläche vorgibt und somit Teil der Flügelstruktur ist. Gleichzeitig kann der Flügel innen liegende Komponenten wie beispielsweise Verstrebungen aufweisen, die für eine mechanische Festigkeit sorgen und an denen beispielsweise die Flügelhaut befestigt ist, so dass diese als Tragestruktur dienen können.

In einer vorteilhaften Ausführungsform ist die Tragestruktur zusammen mit der Flügelstruktur als sogenannte Tandemflügelstruktur ausgebildet. In einer solchen Tandemflügelstruktur ist zumindest ein länglicher Rumpf vorgesehen, von dem zwei in Horizontalrichtung hintereinander angeordnete Paare von Tragflächen quer abragen.

In einer solchen Tandemflügelstruktur kann der Rumpf zusammen mit tragenden Strukturen in den davon abragenden Paaren von Tragflächen als Tragestruktur dienen. An jeder der Tragflächen kann dabei jeweils einer der Hubrotoren angeordnet sein. Werden zum Beispiel zwei Paare von Tragflächen vorgesehen, so können das erste Paar von Tragflächen und das zweite Paar von Tragflächen eine unterschiedliche Pfeilung aufweisen. Weist das erste Paar von Tragflächen eine negative Pfeilung und das zweite Paar von Tragflächen eine positive Pfeilung auf, so kann sich bei einer Draufsicht auf das Fluggerät der Eindruck einer x-förmigen Anordnung der Tragflächen ergeben. Weiterhin kann die Flügelstreckung erhöht werden, indem Ansteckflügel an die bereits in die Tragestruktur integrierten Tragflächen angesteckt werden können, so dass die Spannweite der Flügelstruktur bzw. Tragflächenpaare vergrößert wird. Unter Flügelstreckung versteht der Fachmann im Flugzeugbau das Verhältnis aus dem Quadrat Spannweite beider Tragflächen und der Flügelfläche, die sich bei einer Draufsicht auf das Fluggerät ergibt.

Die beiden Paare von Tragflächen einer Tandemflügelstruktur können zum Beispiel auch entlang der Hochachse des Fluggerätes, also in eine z-Richtung, versetzt zueinander angeordnet sein.

Es sei angemerkt, dass auch mehrere längliche Rümpfe als Teil einer Tragestruktur vorgesehen sein können. Beispielsweise sind zwei längliche Rümpfe parallel zur Flugrichtung nebeneinander angeordnet und durch zumindest eine weitere Tragfläche oder ein weiteres Paar von Tragflächen miteinander verbunden.

Die Hubrotoren sind somit flächig über das Fluggerät verteilt angeordnet und können somit für gute Schwebeflugeigenschaften sorgen. Vorzugsweise können die Hubrotoren jeweils in Endbereichen der Tragflächen angeordnet sein, d.h. seitlich annähernd maximal beabstandet zu dem Rumpf. Die vier Tragflächen der beiden hintereinander angeordneten Paare von Tragflächen können ferner bei ausreichender Reisefluggeschwindigkeit jeweils für einen dynamischen Auftrieb sorgen. Die Tragflächen sowie die Hubrotoren können dabei derart ausgestaltet sein, dass sie im Schwebeflug bzw. bei einer angestrebten Reisefluggeschwindigkeit in etwa gleiche Auftriebskräfte bewirken. Die Tragestruktur des Fluggeräts kann geeignet ausgelegt und dimensioniert sein, um solche Auftriebskräfte aufnehmen zu können. Dementsprechend kann die Tragestruktur hinsichtlich ihrer Festigkeit und ihres Gewichts optimiert werden.

An jeder der Tragflächen kann eine Gondel angeordnet sein, an der jeweils einer der Hubrotoren angeordnet ist. In der Gondel kann beispielsweise ein Motor für den Rotor aufgenommen sein. Die Gondel kann strömungsgünstig in Bezug auf eine von dem Rotor erzeugte Luftströmung und/oder in Bezug auf eine Luftströmung während des Reiseflugs ausgebildet sein.

Insbesondere kann an jeder der Tragflächen ein Leitwerk oder Ruder angeordnet sein. Mit Hilfe solcher Leitwerke bzw. Ruder kann der von der Tandemflügelstruktur erzeugte Auftrieb z.B. beim Beschleunigen auf Reisefluggeschwindigkeit und damit einhergehend beim sukzessiven Drosseln der Hubrotoren geeignet beeinflusst werden.

In einer alternativen Ausgestaltung kann die Tragestruktur zusammen mit der Flügelstruktur ähnlich wie bei einem herkömmlichen Flugzeug als länglicher Rumpf mit lediglich zwei quer abragenden Tragflächen ausgebildet sein. Dabei kann an jeder der Tragflächen jeweils einer der Hubrotoren angeordnet sein und an dem Rumpf wenigstens ein weiterer Hubrotor, vorzugsweise zwei weitere Hubrotoren jeweils an den Enden des Rumpfes, angeordnet sein.

In einer weiteren Alternative kann die Tragestruktur zusammen mit der Flügelstruktur als Nurflüglerstruktur ausgebildet sein. In einer solchen Nurflüglerstruktur wird die gesamte Tragestruktur und die gesamte Flügelstruktur von einem einzigen tragflächenförmigen Flügel mit innen liegenden mechanisch stabilisierenden tragenden Komponenten gebildet. Der Flügel kann hierbei eine in Draufsicht gepfeilte Form aufweisen. Die Hubrotoren und der Schubantrieb können in geeigneten Bereichen einer solchen Nurflüglerstruktur angeordnet werden.

Ferner kann es insbesondere bei einem Fluggerät, das mit einer solchen Nurflüglerstruktur ausgebildet ist, aber auch bei den weiter oben beschriebenen Fluggeräten mit einer Tandemflügelstruktur oder einer Struktur ähnlich wie bei einem herkömmlichen Flugzeug vorteilhaft sein, die Tragestruktur um abragende Gondeln zu erweitern, an denen die Hubrotoren und/oder der Schubantrieb befestigt werden können.

Insbesondere bei einem Fluggerät, das wie oben beschrieben mit einer Tandemflügelstruktur ausgebildet ist, aber auch bei anderen Ausgestaltungen der Tragestruktur und der Flügelstruktur kann es vorteilhaft oder gar zwingend sein, die Hubrotoren derart auszugestalten und anzuordnen und die Flügelstruktur derart zu wählen, dass eine Summe der von den Hubrotoren erzeugbaren Schübe im Wesentlichen durch einen Schwerpunkt des Fluggeräts führt und ein Neutralpunkt der Flügelstruktur relativ zu dem Schwerpunkt des Fluggeräts geeignet für einen Horizontalflug positioniert ist. Durch eine derartige Anordnung der Hubrotoren kann ein stabiler Schwebeflug erreicht werden. Durch die entsprechende Ausgestaltung der Flügelstruktur kann auch im aerodynamischen Flug bei Reisefluggeschwindigkeit ein stabiler Flugzustand erreicht werden.

Die Hubrotoren des Fluggeräts sind dazu ausgebildet, jeweilige Propellerblätter eines Hubrotors in einer bestimmten Rotationsposition zu arretieren.

Ein solches Arretieren der Propellerblätter kann insbesondere vorteilhaft sein, wenn das Fluggerät sich mit hoher Reisefluggeschwindigkeit angetrieben durch den Schubantrieb horizontal bewegt und die Tragflächen der Flügelstruktur dabei ausreichend dynamischen Auftrieb erzeugen, so dass durch die Hubrotoren kein weiterer Auftrieb erzeugt werden braucht. In einer solchen Flugsituation ist es vorteilhaft, die Propellerblätter der Hubrotoren in einer Rotationsposition derart zu arretieren, dass sie beim Reiseflug einerseits einen möglichst geringen Luftwiderstand erzeugen und dass andererseits möglichst geringe horizontal und/oder vertikal wirkende Kräfte auf die Propellerblätter aufgrund an diesen vorbeiströmender Luftströmung erzeugt werden.

Der Propeller eines Hubrotors weist exakt zwei Propellerblätter auf. Ein solcher Propeller weist einerseits einen hohen Wirkungsgrad und andererseits geringe Unwuchten auf. Ferner ist ein solcher Propeller mit zwei Propellerblättern für das vorgeschlagene Fluggerät besonders vorteilhaft, da er während einer Reiseflugposition derart in einer Rotationsposition arretiert werden kann, dass sich der Propeller parallel zu der Flugrichtung erstreckt. In einer solchen Rotationsposition erzeugt der arretierte Propeller minimale Luftwiderstände.

Es kann jedoch auch ein Einblattpropeller vorgesehen sein. Eine solche Konfiguration ist jedoch nicht Teil der Erfindung. Der Einblattpropeller weist an einem über seine Rotorachse hinausragenden Ende ein Massestück auf, welches als Gegenmasse zu dem Einblattpropeller wirkt. Der Einblattpropeller kann zum Beispiel ein Teil eines Hubrotors des Fluggerätes sein, der zum Auftrieb des Fluggerätes im Schwebeflugzustand beiträgt. Der Einblattpropeller kann für den Reiseflugzustand in eine zu einer länglich geformten Gondel parallele Ausrichtung gebracht werden, sodass der Einblattpropeller stillstehend im Wesentlichen parallel zur Flugrichtung oder zur Längsrichtung des Fluggerätes ausgerichtet ist. Der Einblattpropeller und die Gondel sind dann fluchtend zueinander ausgerichtet, was den Luftwiderstand während des Reisefluges des Fluggerätes vermindert. Die Gondel kann wiederum an einem Ende einer Tragfläche angebracht sein.

Vorzugsweise werden bei dem vorgeschlagenen Fluggerät die Hubrotoren und der Schubantrieb durch unabhängig voneinander ansteuerbare Motoren angetrieben. Aufgrund solcher separat voneinander ansteuerbarer Motoren kann bei dem Fluggerät ein durch die Hubrotoren erzeugter Auftrieb einerseits und ein von dem Schubantrieb erzeugter Vortrieb andererseits unabhängig voneinander kontrolliert werden. Insbesondere kann ein durch die Hubrotoren zu bewirkendes Rollen oder Gieren des Fluggeräts unabhängig von dem durch den Schubantrieb zu bewirkenden horizontalen Vortrieb gesteuert werden. Dabei können die Hubrotoren auch mit zunehmender Reisefluggeschwindigkeit entsprechend für eine geringere Auftriebserzeugung angesteuert werden, um dem dann von der Tragfläche der Flügelstruktur bewirkten dynamischen Auftrieb Rechnung tragen zu können.

Vorzugsweise kann jeder der Hubrotoren von einem Elektromotor angetrieben werden. Elektromotoren können bezüglich ihrer Drehzahl präzise und schnell gesteuert werden, so dass der von einem Hubrotor erzeugte Auftrieb schnell und exakt variiert werden kann, um bestimmte Flugbewegungen des Fluggeräts einzuleiten bzw. zu kontrollieren. Insbesondere bei einem Multicopter-ähnlichen Fluggerät kann die präzise und schnelle Steuerung der von den einzelnen Hubrotoren erzeugten Vertikalschubkräfte wichtig für sichere, stabile und gegebenenfalls agil manövrierbare Flugeigenschaften sein.

In einer speziellen Ausgestaltung des vorgeschlagenen Fluggeräts kann der Schubantrieb durch einen Verbrennungsmotor angetrieben werden und der Verbrennungsmotor dabei zusätzlich mit einem Generator gekoppelt sein, um elektrische Energie für die an den Hubrotoren vorgesehenen Elektromotoren bereitzustellen. Bei einem solchen mit einer Art Hybridantrieb versehenen Fluggerät kann die in Horizontalrichtung wirkende Schubkraft durch den Verbrennungsmotor des Schubantriebs bewirkt werden. Der Verbrennungsmotor kann hierbei in Form eines Kolbenmotors oder eines Düsentriebwerks oder Ähnlichem realisiert sein. Treibstoff für einen solchen Verbrennungsmotor kann dabei in dem Fluggerät in ausreichenden Mengen mitgeführt werden, so dass der Schubantrieb über längere Zeiträume hin betrieben werden kann und das Fluggerät somit längere Zeit mit einer Reisefluggeschwindigkeit fliegen kann, um beispielsweise ein entfernt liegendes Ziel zu erreichen. Im Gegensatz zu dem Schubantrieb werden die Hubrotoren jedoch vorzugsweise von Elektromotoren angetrieben, um deren einfachere und präzisere Steuerbarkeit im Vergleich zu einem Verbrennungsmotor nutzen zu können während eines Schwebeflugs oder während des Startens oder Landens. Die elektrische Energie für diese Elektromotoren kann dabei von dem mit dem Verbrennungsmotor gekoppelten Generator bereitgestellt werden, wobei die elektrische Energie entweder direkt von dem Generator an die Elektromotoren geliefert werden kann oder zunächst in einem elektrischen Energiespeicher wie zum Beispiel einer Batterie gespeichert werden kann, um dann bei Bedarf von den Elektromotoren abgerufen zu werden.

Es wird darauf hingewiesen, dass mögliche Merkmale und Vorteile des erfindungsgemäßen Fluggeräts hierin mit Bezug auf unterschiedliche Ausführungsformen beschrieben sind. Ein Fachmann versteht, dass die verschiedenen Merkmale in geeigneter Weise kombiniert oder ausgetauscht werden können, um zu weiteren Ausführungsformen des erfindungsgemäßen Fluggeräts zu gelangen.

In einer alternativen Ausgestaltung kann das Fluggerät wenigstens eine Tragfläche aufweisen, die schwenkbar oder drehbar um eine Drehachse an der Tragestruktur angebracht ist. Die Drehachse ist dabei beispielsweise parallel zur Hochachse oder Gierachse des Fluggerätes ausgerichtet.

In einer alternativen Ausgestaltung weist das Fluggerät eine zweite Tragfläche auf, die schwenkbar um die Drehachse an der Tragestruktur angebracht ist, wobei sich die wenigstens eine Tragfläche und die zweite Tragfläche für einen Schwebeflug in einem verschwenkten Zustand befinden.

Ferner können sich die wenigstens eine Tragfläche und die zweite Tragfläche für einen Reiseflug in einem eingeschwenkten Zustand befinden, bei dem Vorderkanten der Tragflächen zumindest teilweise fluchtend zueinander ausgerichtet sind.

Ebenfalls kann die Tragestruktur zusammen mit der Flügelstruktur als Tandemflügelstruktur mit einem länglichen Rumpf und zwei in Horizontalrichtung hintereinander angeordneten Paaren von von dem Rumpf abragenden Tragflächen derart ausgebildet sein, dass das erste Paar von Tragflächen eine erste Pfeilung aufweist, die sich von einer zweiten Pfeilung des zweiten Paares von Tragflächen unterscheidet. Die Pfeilung beschreibt dabei einen Winkel zwischen einer Querachse des Fluggerätes und der Vorderkante der Tragflächen.

In einer alternativen Ausgestaltung des Fluggerätes ist das erste Paar von Tragflächen und das zweite Paar von Tragflächen durch wenigstens eine Verbindungsstruktur verbunden. Dabei weist die wenigstens eine Verbindungsstruktur eine längliche Form auf und ist parallel zum länglichen Rumpf ausgerichtet ist. Ferner kann die wenigstens eine Verbindungsstruktur ein Leitwerk aufweisen.

In einer alternativen Ausgestaltung ist das erste Paar von Tragflächen und das zweite Paar von Tragflächen in einer Vertikalrichtung versetzt zueinander angeordnet sind. Die Vertikalrichtung beschreibt dabei eine zur Hochachse bzw. Gierachse des Fluggerätes parallele Achse und ist zum Beispiel zur Querachse und einer Längsrichtung des Fluggerätes senkrecht ausgerichtet.

In einer weiteren alternativen Ausgestaltung sind die Propeller der Hubrotoren als Einblattpropeller ausgebildet.

### KURZE BESCHREIBUNG DER ZEICHNUNGEN

Nachfolgend werden Ausführungsformen der vorliegenden Erfindung mit Bezug auf die beigefügten Zeichnungen beschrieben, wobei weder die Zeichnungen noch die Beschreibung als die Erfindung einschränkend auszulegen sind.
Fig. 1 zeigt eine perspektivische Ansicht eines erfindungsgemäßen Fluggeräts mit Tandemflügelstruktur.
Fig. 2 zeigt eine Draufsicht auf das Fluggerät aus Fig. 1.
Fig. 3 zeigt eine perspektivische Ansicht eines erfindungsgemäßen Fluggeräts mit auf dieses wirkenden Kräften.
Fig. 4 zeigt eine mögliche Konfiguration von Antrieben für ein erfindungsgemäßes Fluggerät.
Fig. 5 zeigt eine Draufsicht eines erfindungsgemäßen Fluggerätes mit zwei sich in einem verschwenkten Zustand befindenden Tragflächen.
Fig. 6 zeigt eine Draufsicht eines erfindungsgemäßen Fluggerätes mit zwei sich in einem eingeschwenkten Zustand befindenden Tragflächen.
Fig. 7 zeigt eine perspektivische Ansicht eines erfindungsgemäßen Fluggerätes mit einer Tandemflügelstruktur, bei der die Tragflächen gepfeilt sind.
Fig. 8 zeigt eine Draufsicht eines erfindungsgemäßen Fluggerätes mit einer weiteren Tandemflügelstruktur, bei der die Tragflächen gepfeilt sind.
Fig. 9 zeigt eine Draufsicht eines erfindungsgemäßen Fluggerätes mit sechs Hubrotoren.
Fig. 10 zeigt eine Draufsicht eines erfindungsgemäßen Fluggerätes mit zwei zueinander parallel angeordneten länglichen Rümpfen und zwei Paaren von Tragflächen, an denen Hubrotoren angebracht sind.
Fig. 11 zeigt eine Draufsicht eines erfindungsgemäßen Fluggerätes mit zwei Paaren von Tragflächen und zwei zueinander parallel angeordneten länglichen Rümpfen, an denen Hubrotoren angebracht sind.
Fig. 12 zeigt eine perspektivische Ansicht eines erfindungsgemäßen Fluggerätes mit einer Tragestruktur, welche zwei Paare von Tragflächen mit unterschiedlichen Pfeilungen aufweist.
Fig. 13 zeigt eine Draufsicht eines erfindungsgemäßen Fluggerätes mit einer Tragestruktur, welche zwei Paare von Tragflächen mit unterschiedlichen Pfeilungen aufweist.
Fig. 14 zeigt eine Draufsicht eines erfindungsgemäßen Fluggerätes, bei dem der Rumpf in die Tragflächen intergiert ist.
Fig. 15 zeigt eine Draufsicht eines erfindungsgemäßen Fluggerätes mit einer Tragestruktur, welche einen länglichen Rumpf, ein Paar von Tragflächen sowie an Verbindungselementen angebrachte Hubrotoren aufweist.
Fig. 16 zeigt eine Draufsicht eines erfindungsgemäßen Fluggerätes mit einer Tragestruktur, welche einen länglichen Rumpf, ein Paar von Tragflächen sowie Verbindungselemente aufweist, die mittig auf den Tragflächen angeordnet sind und an denen Hubrotoren befestigt sind.
Fig. 17 zeigt eine perspektivische Ansicht eines Fluggerätes mit einer Tragestruktur, welche einen Rumpf, zwei in Längsrichtung hintereinander angeordnete Paare von Tragflächen sowie zwei parallel zur Längsrichtung angeordnete längliche Verbindungselemente aufweist.
Fig. 18 zeigt eine perspektivische Ansicht einer länglich geformten und an einer Tragfläche befestigten Gondel mit einem Einblattpropeller, der nicht Teil der Erfindung ist.

Die Figuren sind lediglich schematisch und nicht maßstabsgetreu. Gleiche Bezugszeichen in den Figuren bezeichnen gleiche oder gleichwirkende Merkmale.

### BESCHREIBUNG VORTEILHAFTER AUSFÜHRUNGSFORMEN DER ERFINDUNG

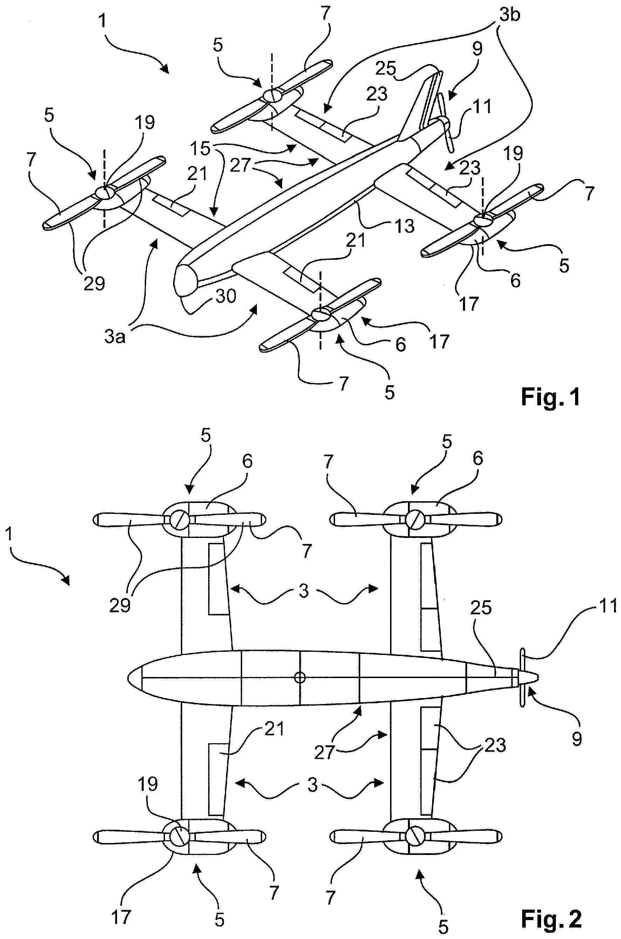

In den Fig. 1 und 2 ist eine perspektivische Ansicht und eine Draufsicht eines Fluggeräts 1 gemäß einer Ausführungsform der vorliegenden Erfindung dargestellt.

Das Fluggerät 1 weist in der dargestellten Ausführungsform eine Tandemflügelstruktur auf, wobei ähnlich wie bei einem Quadcopter an jedem Ende einer der Tragflächen 3 einer von vier mit einem Propeller 7 ausgestatteten Hubrotoren 5 angeordnet ist. Die Hubrotoren sind an Gondeln 6 an den Enden der Tragflächen 3 angeordnet.

Das Fluggerät 1 weist eine Tragestruktur 27 sowie eine Flügelstruktur 15 auf.

Die Tragestruktur 27 gibt dem Fluggerät 1 die erforderliche mechanische Festigkeit, um beispielsweise von den Hubrotoren 5 oder von den Tragflächen 3 erzeugte Kräfte zwischen einzelnen Bereichen des Fluggeräts 1 zu übertragen. Die Tragestruktur 27 weist hierfür beispielsweise Streben, Stringer und Spanten auf, mit denen unter anderem ein länglicher Rumpf 13 sowie tragende Teile der Tragflächen 3 gebildet werden können. Die Tragestruktur kann auch dazu dienen, beispielsweise ein Kamerasystem 30 zu halten.

Die Flügelstruktur 15 bildet unter anderem die mehreren Tragflächen 3 des Fluggeräts. Jede der Tragflächen 3 der Flügelstruktur 15 weist dabei ein geeignetes Profil auf, um bei einer Horizontalbewegung des Fluggeräts 1 durch dynamischen Auftrieb eine Auftriebskraft auf das Fluggerät 1 zu erzeugen.

In dem in Fig. 1 und 2 dargestellten Beispiel ist die Tragestruktur 27 zusammen mit der Flügelstruktur 15 als Tandemflügelstruktur ausgebildet, bei der ein länglicher Rumpf 13 mit zwei in Horizontalrichtung hintereinander angeordneten Paaren von Tragflächen 3, die quer, näherungsweise rechtwinklig, von dem Rumpf 13 seitlich abragen, versehen ist.

Die Tragflächen 3 der Flügelstruktur 15 sind hierbei derart ausgebildet und an derart geeigneten Positionen am Rumpf 13 angebracht, dass ein Neutralpunkt der Flügelstruktur 15 relativ zu einem Schwerpunkt des Fluggeräts 1 geeignet für einen Horizontalflug des Fluggeräts 1 positioniert ist. Unter einem Neutralpunkt eines Tragflügelprofils bzw. einer Flügelstruktur mit mehreren Tragflügelprofilen kann dabei ein Festpunkt mit konstantem Drehmoment im Bereich mäßiger Anstellwinkel verstanden werden.

Sowohl an den Tragflächen 3a eines vorderen Tragflügelpaars als auch an den Tragflächen 3b eines hinteren Tragflächenpaars können ferner Leitwerke 21, 23 in Form von Klappen oder Rudern vorgesehen sein, die ähnlich wie bei einem herkömmlichen Flugzeug bei hohen Reisefluggeschwindigkeiten in Horizontalrichtung als Höhenruder bzw. Höhenleitwerk dienen können. Ferner kann am Heck des Rumpfes 13 ein Seitenleitwerk bzw. Seitenruder 25 vorgesehen sein.

An Enden bzw. Endbereichen jeder der Tragflächen 3a, 3b ist jeweils ein Hubrotor 5 an einer Gondel 6 vorgesehen, so dass die insgesamt vier Hubrotoren 5 in einer gemeinsamen Ebene und an den vier Ecken eines virtuellen Vierecks angeordnet sind.

Jeder der Hubrotoren 5 weist einen Propeller 7 auf, der über eine Rotorachse 19 und einem Motor rotierend angetrieben werden kann. Der Propeller 7 kann dabei ein starrer, vorzugsweise einstückiger Propeller sein, so dass ein von dem Hubrotor 5 erzeugter Auftrieb lediglich durch Variieren der Drehzahl des Propellers 7 verändert werden kann. Alternativ kann der Propeller 7 ein Verstellpropeller sein, bei dem Propellerblätter 29 in ihrer Steigung verändert werden können und auf diese Weise auch bei gleichbleibender Drehzahl ein von dem Hubrotor 5 erzeugter Auftrieb verändert werden kann.

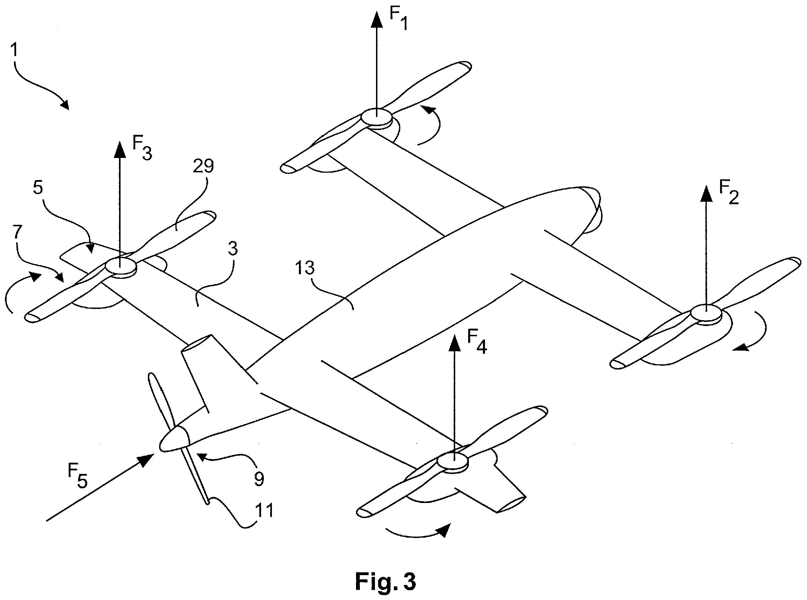

Wie in Fig. 3 dargestellt, ist jeder der Hubrotoren 5 dazu ausgelegt, eine Auftriebskraft F1, F2, F3, F4 zu erzeugen. Die Hubrotoren 5 sollten dabei derart an dem Fluggerät 1 positioniert und ausgerichtet sein, dass eine Summe der von ihnen erzeugten Auftriebskräfte in etwa durch einen Schwerpunkt des Fluggeräts 1 verläuft, insbesondere bei gleichzeitiger gleichmäßiger Betätigung aller Hubrotoren 5. Der von den Hubrotoren 5 insgesamt erzeugbare Schub sollte dabei genügen, das Fluggerät 1 anheben und schweben zu lassen. Die Hubrotoren 5 drehen dabei, wie in Fig. 3 mit Pfeilen angedeutet, teilweise gegenläufig, sodass sich die von den Hubrotoren 5 erzeugten Momente im Wesentlichen gegenseitig aufheben.

Durch Variieren der von den einzelnen Hubrotoren 5 erzeugten Auftriebskräfte F1, F2, F3, F4 kann der in Summe erzeugte und auf das Fluggerät 1 wirkende Gesamtschub in Betrag und Richtung variiert werden und auf diese Weise das Fluggerät 1 steigen oder sinken, vorwärts oder rückwärts oder zu einer der Seiten verkippen oder sich um eine Hochachse des Fluggeräts drehen, so dass Flugbewegungen wie Vorwärtsflug, Rollen und/oder Gieren bewirkt werden können.

Prinzipiell können somit bei dem vorgeschlagenen Fluggerät 1 ähnlich wie bei einem Quadcopter alle Flugbewegungen bereits durch geeignetes Ansteuern der verschiedenen Hubrotoren 5 bewirkt werden. Allerdings ist hierbei eine erreichbare Reisefluggeschwindigkeit, mit der sich das Fluggerät 1 in horizontaler Richtung bewegen kann, aufgrund physikalischer Effekte beschränkt.

Um hohe Reisefluggeschwindigkeiten zu erreichen, ist das vorgeschlagene Fluggerät 1 daher zusätzlich mit einem Schubantrieb 9 ausgestattet, mithilfe dessen eine in Horizontalrichtung wirkende Schubkraft F5 (siehe Fig. 3) erzeugt werden kann.

Im dargestellten Beispiel ist der Schubantrieb 9 mithilfe eines von einem zusätzlichen Motor angetriebenen Schubpropellers 11 ausgebildet und am Heck des Rumpfes 13 angeordnet. Der Schubantrieb 9 kann jedoch auch andere Antriebsmechanismen wie beispielsweise ein Düsentriebwerk einsetzen. Der Schubantrieb 9 sollte ausreichend dimensioniert sein, das heißt eine ausreichende Leistungsabgabe ermöglichen, um das Fluggerät 1 auf hohe Reisefluggeschwindigkeiten von beispielsweise bis zu 800 km/h beschleunigen zu können.

Bei dem durch den Schubantrieb 9 beschleunigten Fluggerät 1 wird mit zunehmender Reisefluggeschwindigkeit an den profilierten Tragflächen 3 ein zunehmender dynamischer Auftrieb erzeugt. Dieser dynamische Auftrieb hilft, das Fluggerät 1 in der Luft zu halten, so dass die von den Hubrotoren 5 erzeugten Auftriebskräfte F1, F2, F3, F4 sukzessive vermindert werden können, bis das Fluggerät 1 eine ausreichend hohe Reisefluggeschwindigkeit in horizontaler Richtung erreicht hat, bei der der gesamte zum Halten der Flughöhe notwendige Auftrieb für das Fluggerät von den Tragflächen 3 erzeugt wird.

Bei einer solchen Reisefluggeschwindigkeit können die Hubrotoren 5 gestoppt werden. Insbesondere ist vorgesehen, die Propeller 7 der Hubrotoren 5 in einer Position zu arretieren, in der sie einen möglichst geringen Luftwiderstand erzeugen und möglichst geringe Kräfte auf einen Propeller 7 wirken.

Erfindungsgemäß sind die Propeller 7 hierzu mit lediglich zwei Propellerblättern 29 ausgestattet, so dass der sich linear erstreckende Propeller 7 mit seinen Propellerblättern 29 bei Reiseflug in Flugrichtung ausgerichtet werden kann und in dieser Orientierung arretiert werden kann. Alternativ wäre auch vorstellbar, den Propeller 7 beim Reiseflug einzuklappen oder den Propeller 7 bzw. den gesamten Hubrotor 5 während eines Reiseflugs strömungswiderstandserniedrigend beispielsweise in einer an einem jeweiligen Tragflächenende vorgesehenen Gondel 17 zu versenken.

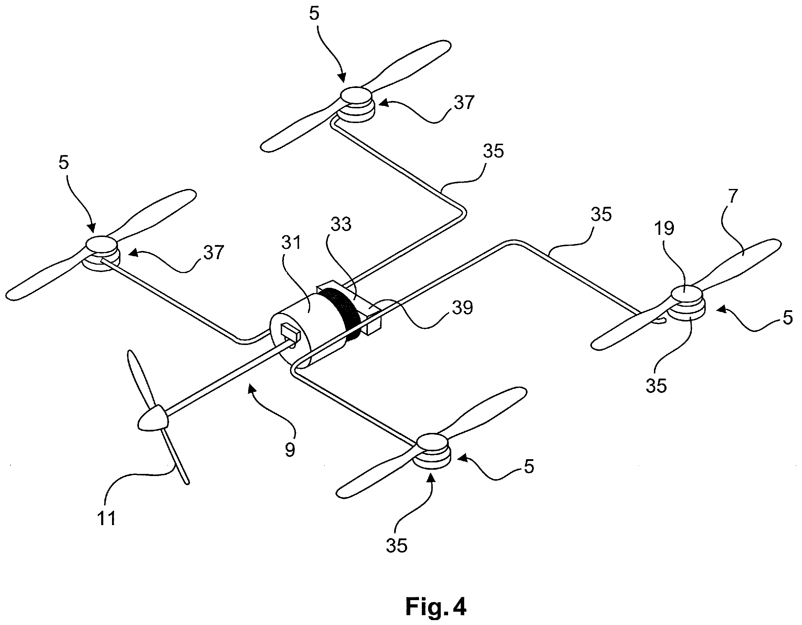

In Fig. 4 ist eine Möglichkeit eines vorteilhaften Hybridantriebssystems für ein erfindungsgemäßes Fluggerät 1 dargestellt.

Ein Hauptmotor 31 wird hierbei dazu eingesetzt, einen Schubpropeller 11 anzutreiben. Der Hauptmotor 31 bildet somit zusammen mit dem Schubpropeller 11 den Schubantrieb 9, um die in Horizontalrichtung auf das Fluggerät wirkende Schubkraft F5 zu erzeugen. Der Hauptmotor 31 kann dabei ein beliebiger Motortyp sein, der geeignet ist, ausreichende Leistungen für einen Horizontalflug bei gewünscht hohen Reisefluggeschwindigkeiten zu ermöglichen. Beispielsweise kann der Hauptmotor 31 ein Dieselmotor, ein Ottomotor, ein Wankelmotor, eine Gasturbine, ein von einer Brennstoffzelle versorgter Elektromotor, etc. sein.

Zusätzlich zu dem Schubpropeller 11 treibt der Hauptmotor 31 auch einen elektrischen Generator 33 an. Der Generator 33 wandelt die von dem Hauptmotor 31 mechanisch zur Verfügung gestellte Antriebsenergie in elektrische Energie um und stellt diese über Leitungen 35 mehreren Elektromotoren 37 zur Verfügung. Die Elektromotoren 37 sind dabei Teil der an den Tragflächenenden vorgesehenen Hubrotoren 5 des Quadrocopter-ähnlichen Fluggeräts 1. Die Elektromotoren 37 können über eine Rotorachse 19 jeweils den daran befestigten Propeller 7 antreiben. Das auf den Propeller 7 wirkende Drehmoment und somit die von dem Propeller 7 angenommene Drehzahl kann dabei sehr genau und schnell mithilfe des Elektromotors 37 variiert werden. Um die vier Elektromotoren 37 mit elektrischer Leistung versorgen und ansteuern zu können, ist in dem Generator 33 eine Leistungselektroniksteuerung 39 vorgesehen.

Alternativ zu dem vorangehend beschriebenen Hybridantriebssystem kann das vorgeschlagene Fluggerät 1 auch mit anderen Antriebssystemen betrieben werden. Beispielsweise können auch die Hubrotoren 5 mit Verbrennungsmotoren angetrieben werden. Alternativ kann für das gesamte Antriebssystem ein zentraler Motor vorgesehen werden und die mehreren Hubrotoren über Leistungsübertragungswellen mit diesem Motor gekoppelt werden, wobei in den zugehörigen Antriebssträngen gegebenenfalls Kupplungen und/oder Getriebe vorgesehen werden können. Ein von einem Hubrotor 5 zu erzeugender Auftrieb kann dabei durch Ändern der Drehzahl und/oder durch Ändern einer einstellbaren Steigung der Propellerblätter des Hubrotors variiert werden. Jeder der Hubrotoren 5 kann auch über einen separaten Elektromotor angetrieben werden, wobei die Elektromotoren ihrerseits durch einen Hauptmotor angetrieben werden können.

Die beschriebenen Antriebsmöglichkeiten, wie beispielsweise das Hybridantriebssystem, können mit allen zuvor und im Folgenden erläuterten Ausführungsformen kombiniert werden. Dies ist möglich, da in den beschriebenen Ausführungsformen stets sowohl mindestens ein Schubantrieb 9 und mindestens drei Hubrotoren 5 vorgesehen sind.

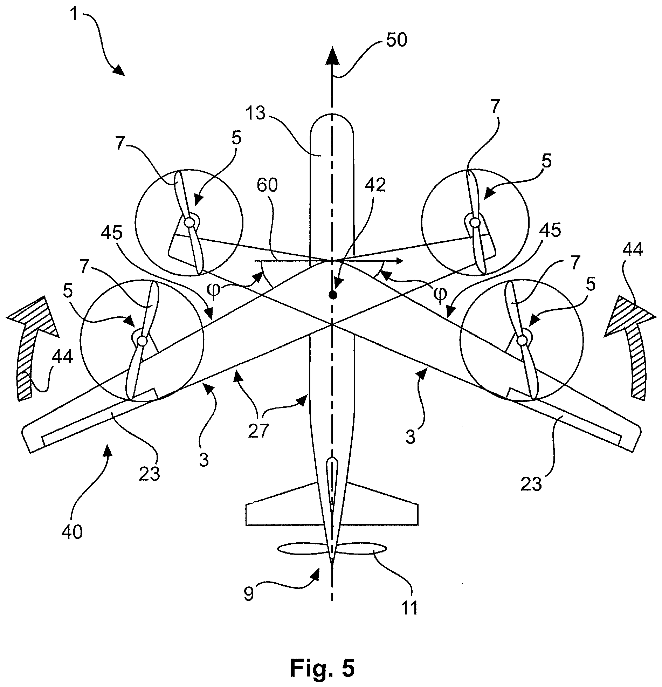

Fig. 5 zeigt eine Draufsicht des Fluggerätes 1 mit einer Tragestruktur 27, die zwei gegeneinander verschwenkbare Tragflächen 3 aufweist. In der dargestellten Konfiguration befindet sich das Fluggerät 1 in einem Schwebeflugzustand 40, bei dem sich die Tragflächen 3 in einem verschwenkten Zustand befinden. Die Tragflächen 3 sind dabei um eine Drehachse 42 schwenkbar bzw. drehbar gelagert. Die Drehachse 42 ist zum Beispiel parallel zur Hochachse und/oder Gierachse des Fluggerätes 1 angeordnet und verläuft durch den länglichen Rumpf 13 des Fluggerätes 1. Dabei ragen die Tragflächen 3 in der Draufsicht jeweils über den länglichen Rumpf 13 hinaus, so dass sich beide Tragflächen 3 im Bereich der Drehachse 42 kreuzen. Mit anderen Worten erstreckt sich die linke Tragfläche über den länglichen Rumpf 13 hinweg auf die rechte Seite des Fluggerätes 1 und die rechte Tragfläche erstreckt sich über den länglichen Rumpf 13 hinweg auf die linke Seite des Fluggerätes 1. Dabei ist zu berücksichtigen, dass mit linker Tragfläche des Rumpfes 13 die sich in Flugrichtung auf der linken Seite befindende Tragfläche gemeint ist, wobei die Flugrichtung diejenige Horizontalrichtung beschreibt, in die der Schub des Schubantriebs 9 mit dem Schubpropeller 11 wirkt. Analog ist mit rechter Tragfläche des Rumpfes 13 die sich in Flugrichtung auf der rechten Seite befindende Tragfläche gemeint. Der auf die rechte Seite des Rumpfes 13 hinausragende Teil der linken Tragfläche kann flächenmäßig kleiner sein als der sich auf der linken Seite des Rumpfes 13 befindende Teil der linken Tragfläche. Analog kann der auf die linke Seite des Rumpfes 13 hinausragende Teil der rechten Tragfläche flächenmäßig kleiner sein als der sich auf der rechten Seite des Rumpfes 13 befindende Teil der rechten Tragfläche.

Eine Flügelvorderkante 45 bzw. Tragflächenvorderkante kann unter einem vorgegebenen Pfeilungswinkel ϕ geneigt gegenüber einer Querachse 60 des länglichen Rumpfes 13 angeordnet sein. Unter einer Querachse 60 versteht der Fachmann im Flugzeugbau eine zur Längsrichtung 50 des Rumpfes 13 und zur Hochachse des Flugzeugs senkrecht ausgerichtete Achse. Der Pfeilungswinkel ϕ wird zum Beispiel zwischen der Querachse 60 des Rumpfes 13 und der Vorderkante 45 der Tragflächen 3 gemessen. Die Pfeilung der Tragflächen 3 bzw. der Pfeilungswinkel ϕ kann zum Beispiel an die Fluggeschwindigkeit des Fluggerätes 1 im Horizontalflug angepasst werden. Dazu kann der Pfeilungswinkel ϕ bei einem Übergang von einem Schwebeflugzustand 40 in einen Reiseflugzustand, welcher nachfolgend eingehend beschrieben wird, kontinuierlich verkleinert werden. Die Pfeile 44 zeigen die Bewegung der Tragflächen 3 beim Übergang vom Schwebeflugzustand 40 in den Reiseflugzustand, das heißt von dem verschwenkten Zustand in einen eingeschwenkten Zustand. Eine Arretierung der Tragflächen 3 bei einer bestimmten Pfeilung kann durch eine entsprechende Arretiervorrichtung für die Tragflächen 3 bereitgestellt werden. Die Querrichtung 60 des länglichen Rumpfes 13 kann senkrecht zu der Drehachse 42 und/oder senkrecht zur Horizontalrichtung ausgerichtet sein. Die Horizontalrichtung ist zum Beispiel parallel zur Längsrichtung 50 des länglichen Rumpfes 13 des Fluggerätes 1. Die schwenkbaren Tragflächen weisen jeweils zwei Hubrotoren 5 auf, wobei jeder der Hubrotoren 5 einen Propeller 7 aufweist. Die Hubrotoren 5 sind im verschwenkten Zustand derart an dem Fluggerät 1 positioniert und ausgerichtet, dass eine Summe der von ihnen erzeugten Auftriebskräfte in etwa durch den Schwerpunkt des Fluggeräts 1 verläuft, insbesondere bei gleichzeitiger gleichmäßiger Betätigung aller Hubrotoren 5. Dies ermöglicht einen Schwebeflugzustand 40, bei dem sich das Fluggerät 1 nicht oder nur geringfügig in Horizontalrichtung bewegt. Beispielsweise ist ein Hubrotor 5 der linken Tragfläche auf der linken Seite des Rumpfes 13 angebracht und ein weiterer Hubrotor 5 ist auf dem auf die rechte Seite des Rumpfes13 hinausragenden Teil der linken Tragfläche angebracht. Analog ist ein Hubrotor 5 der rechten Tragfläche auf der rechten Seite des Rumpfes 13 angebracht und ein weiterer Hubrotor 5 ist auf dem auf die linke Seite des Rumpfes13 hinausragenden Teil der rechten Tragfläche angebracht. Beim Übergang vom Schwebeflugzustand 40 in den Reiseflugzustand kann die Rotationsgeschwindigkeit der Propeller 7 der Hubrotoren 5 kontinuierlich verlangsamt werden, so dass diese im Reiseflugzustand letztendlich stillstehen.

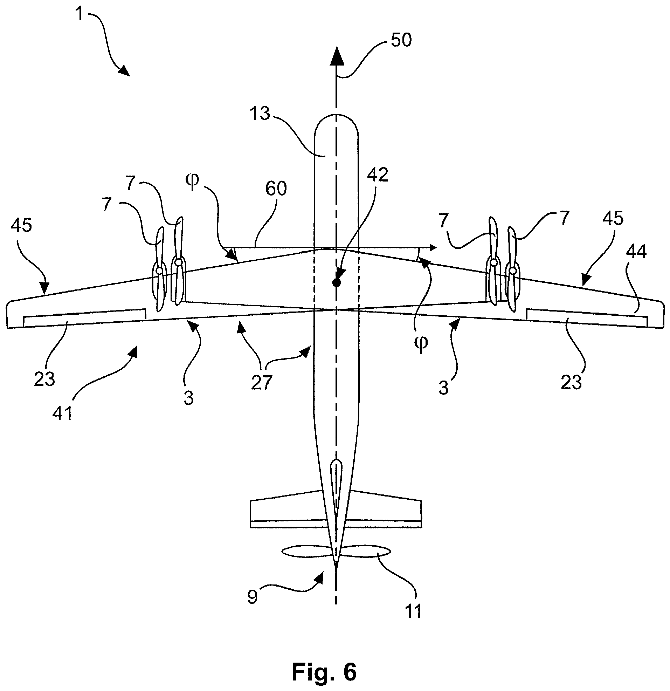

Fig. 6 zeigt eine Draufsicht des Fluggerätes 1 mit einer Tragestruktur 27, die zwei gegeneinander verschwenkbare Tragflächen 3 aufweist. In der dargestellten Konfiguration befindet sich das Fluggerät 1 im Reiseflugzustand 41, bei dem sich die Tragflächen 3 in einem eingeschwenkten Zustand befinden. Im Reiseflugzustand 41 ist der Pfeilungswinkel ϕ kleiner als im Schwebeflugzustand 40. Die Vorderkante 45 der linken Tragfläche kann im eingeschwenkten Zustand mit der Vorderkante des über den Rumpf 13 hinausragenden Teils der rechten Tragfläche fluchtend ausgerichtet sein. Analog kann im eingeschwenkten Zustand die Vorderkante 45 der rechten Tragfläche mit der Vorderkante des über den Rumpf 13 hinausragenden Teils der linken Tragfläche fluchtend ausgerichtet sein. Die Propeller 7 der Hubrotoren 5 sind im eingeschwenkten Zustand stillstehend und derart ausgerichtet, dass sie im Reiseflugzustand 41 einen möglichst geringen Luftwiderstand erzeugen. Zum Beispiel sind die länglich geformten Propeller 7 dann in ihrer Längsrichtung parallel zur Horizontalrichtung oder Längsrichtung 50 des Rumpfes 13 ausgerichtet.

Der Pfeilungswinkel ϕ der Tragflächen 3 kann sowohl im verschwenkten Zustand als auch im eingeschwenkten Zustand zwischen 0 Grad und 90 Grad groß. Ist der Pfeilungswinkel ϕ größer als 0 Grad, so liegt eine positive Pfeilung vor. Ist der Pfeilungswinkel ϕ kleiner als 0 Grad, so liegt eine negative Pfeilung vor. Ist der Pfeilungswinkel gleich 0 Grad, so liegt keine Pfeilung vor. Bei dem erfindungsgemäßen Fluggerät 1 sind sowohl positive als auch negative Pfeilungen der Tragflächen 3 möglich. Ebenfalls können die Tragflächen 3 ungepfeilt sein. Eine positive sowie negative Pfeilung kann bei allen zuvor und im Folgenden beschriebenen Ausführungsformen vorgesehen sein.

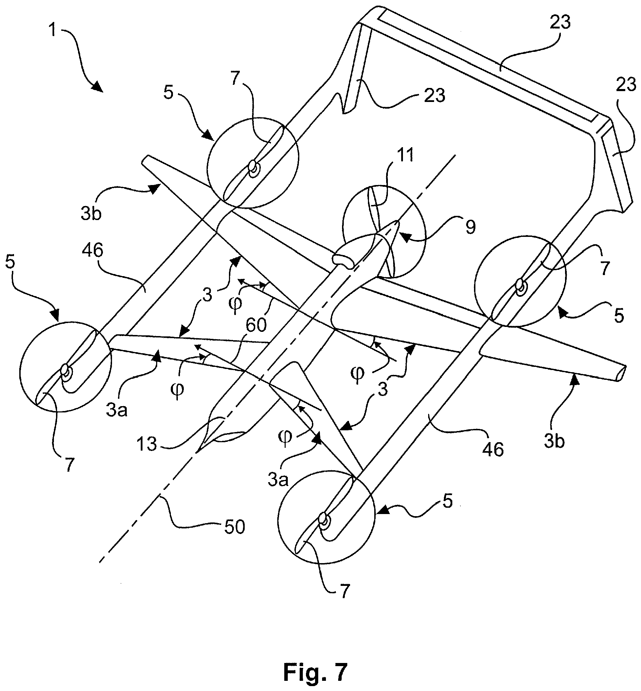

Fig. 7 zeigt eine perspektivische Ansicht des Fluggerätes 1 mit einer Tandemflügelstruktur. Dabei sind der längliche Rumpf 13 und zwei in Horizontalrichtung hintereinander angeordnete Paare von vom Rumpf 13 abragenden Tragflächen 3 ausgebildet. Das erste Paar von Tragflächen 3a weist eine negative Pfeilung mit einem Pfeilungswinkel ϕ zwischen 0 und -90 Grad auf und das zweite Paar von Tragflächen 3b weist eine positive Pfeilung mit einem Pfeilungswinkel ϕ zwischen 0 und 90 Grad auf. In der gezeigten Ausführungsform ist das erste Paar von Tragflächen 3a unter Berücksichtigung der Flugrichtung vor dem zweiten Paar von Tragflächen 3b angeordnet, so dass bei einer Draufsicht auf das Fluggerät 1 der Eindruck einer x-förmigen Anordnung des ersten Paares von Tragflächen 3a und des zweiten Paares von Tragflächen 3b entsteht. Das erste Paar von Tragflächen 3 und das zweite Paar von Tragflächen 3 sind durch Verbindungsstrukturen 46 miteinander verbunden. Dabei ist die rechte Tragfläche des ersten Paares von Tragflächen 3a durch eine Verbindungsstruktur 46 mit der rechten Tragfläche des zweiten Paares von Tragflächen 3b verbunden. Analog ist die linke Tragfläche des ersten Paares von Tragflächen 3a durch eine weitere Verbindungsstruktur 46 mit der linken Tragfläche des zweiten Paares von Tragflächen 3b verbunden. Vorzugsweise sind also zwei Verbindungsstrukturen 46 vorgesehen, jedoch können beliebig viele Verbindungsstrukturen 46 vorgesehen sein. Eine Verbindungsstruktur 46 kann zum Beispiel an einem Ende der linken Tragfläche des ersten Paares von Tragflächen 3a angebracht sein und eine andere Verbindungsstruktur 46 kann zum Beispiel an einem Ende der rechten Tragfläche des ersten Paares von Tragflächen 3a angebracht sein. Die Verbindungsstrukturen 46 können eine längliche Form aufweisen und parallel zur Längsrichtung 50 des Rumpfes 13 ausgerichtet sein. Die Verbindungsstrukturen (46) können ferner durch ein Leitwerk 23 miteinander verbunden sein. Das Leitwerk 23 ist beispielsweise ein Seitenleitwerk oder ein Höhenleitwerk oder eine Kombination aus Seitenleitwerk und Höhenleitwerk. Die Verbindungsstrukturen 46 können derart angeordnet sein, dass die Tragflächen des zweiten Paares von Tagflächen 3b die Verbindungsstrukturen 46 kreuzen und die Tragflächen des ersten Paares von Tagflächen 3a in den Verbindungsstrukturen 46 enden. Die Verbindungsstrukturen 46 können weiterhin Hubrotoren 5 mit Propellern 7 aufweisen. Dabei sind auf beiden Verbindungsstrukturen 46 jeweils zwei Hubrotoren 5 angebracht. Die Hubrotoren 5 sind derart an dem Fluggerät 1 positioniert und ausgerichtet, dass eine Summe der von ihnen erzeugten Auftriebskräfte in etwa durch den Schwerpunkt des Fluggeräts 1 verläuft, insbesondere bei gleichzeitiger gleichmäßiger Betätigung aller Hubrotoren 5. Jeweils ein Hubrotor 5 ist dabei an den Verbindungsstrukturen 46 im Bereich des ersten Paares von Tragflächen 3a angebracht und jeweils ein Hubrotor 5 ist an den Verbindungsstrukturen 46 im Bereich des zweiten Paares von Tragflächen 3b angebracht. Durch die Anordnung der Hubrotoren 5 kann das Fluggerät 1 in einen Schwebeflugzustand 40 gebracht werden. Die Verbindungsstrukturen 46 können unter Berücksichtigung der Flugrichtung des Fluggerätes 1 bis hinter den am Rumpf 13 angebrachten Schubantrieb 9 hinausragen, wo die beiden Verbindungsstrukturen 46 durch das Leitwerk 23 miteinander verbunden sind. Die in Längsrichtung 50 ausgerichteten Verbindungsstrukturen 46 sind somit durch das erste Paar von Tragflächen 3a, das zweite Paar von Tragflächen 3b und das Leitwerk 23 miteinander verbunden. Die Verbindungsstrukturen 46 haben somit keinen direkten Kontakt mit dem Rumpf 13, sondern sind mit diesem über die Tragflächenpaare verbunden.

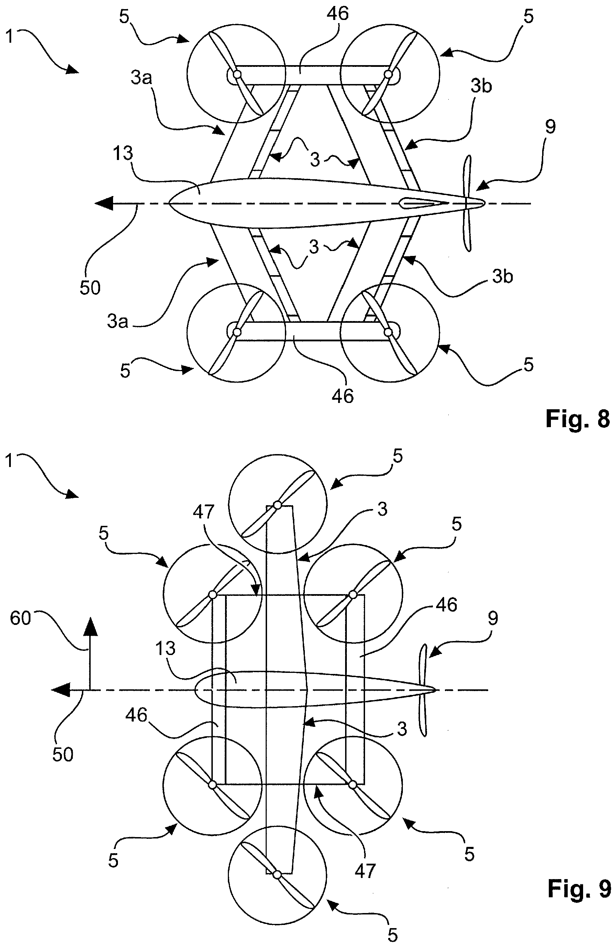

Fig. 8 zeigt eine Draufsicht einer Konfiguration des Fluggerätes 1, bei der das erste Paar von Tragflächen 3a unter Berücksichtigung der Flugrichtung vor dem zweiten Paar von Tragflächen 3b angeordnet ist. Dabei weist das erste Paar von Tragflächen 3a eine positive Pfeilung und das zweite Paar von Tragflächen 3b eine negative Pfeilung auf, so dass in der Draufsicht der Eindruck einer o-förmigen Anordnung des ersten Paares von Tragflächen 3a und des zweiten Paares von Tragflächen 3b entsteht, wenn die Enden einer jeden Tragfläche durch Verbindungsstrukturen 46 miteinander verbunden sind. Alle Tragflächen 3 sind also an deren Enden mit Verbindungsstrukturen 46 verbunden, so dass zwei Verbindungsstrukturen 46 zur Längsrichtung 50 des Rumpfes 13 parallel ausgerichtet sind. Eine erste Verbindungsstruktur 46 verbindet die rechten Tragflächen des ersten Paares und des zweiten Paares von Tragflächen 3a, 3b und eine zweite Verbindungsstruktur 46 verbindet die linken Tragflächen des ersten Paares und des zweiten Paares von Tragflächen 3a, 3b Zudem können die Tragflächen jeweils Leitwerke 23 und/oder Hochauftriebssysteme, wie beispielsweise Landeklappen, aufweisen. Die beiden Verbindungsstrukturen können jeweils zwei Enden aufweisen, an denen jeweils ein Hubrotor 5 angeordnet ist. Die vier Hubrotoren 5 sind derart an dem Fluggerät 1 positioniert und ausgerichtet, dass eine Summe der von ihnen erzeugten Auftriebskräfte in etwa durch den Schwerpunkt des Fluggeräts 1 verläuft, insbesondere bei gleichzeitiger gleichmäßiger Betätigung aller Hubrotoren 5, so dass ein Schwebeflugzustand 40 des Fluggerätes 1 möglich ist.

Fig. 9 zeigt eine Draufsicht einer Konfiguration des Fluggerätes 1 mit sechs Hubrotoren 5. Das Fluggerät weist dazu ein Paar von Tragflächen 3 und zwei Verbindungsstrukturen 46 auf, wobei die Verbindungsstrukturen 46 parallel zur Querachse 60 des Fluggerätes ausgerichtet sind. Die Verbindungsstrukturen 46 sind bezogen auf die Flugrichtung des Fluggerätes 1 versetzt zueinander angeordnet, so dass eine Verbindungsstruktur 46 vor den Tragflächen 3 und eine Verbindungsstruktur 46 hinter den Tragflächen 3 angeordnet ist. Die Verbindungsstrukturen 46 können zum Beispiel mit einem dynamischen Auftrieb erzeugenden Profil versehen sein, so dass sich aus der Queranordnung der Verbindungsstrukturen 46 der Vorteil ergibt, zusätzlich zu den Tragflächen 3 einen Auftrieb durch die Verbindungsstrukturen 46 zu erzeugen. Die Hubrotoren 5 sind an den jeweiligen Enden der parallel zur Querachse 60 orientierten Verbindungsstrukturen 46 und Tragflächen 3 angebracht. Die sechs Hubrotoren 5 sind dabei derart positioniert und ausgerichtet, dass eine Summe der von ihnen erzeugten Auftriebskräfte in etwa durch den Schwerpunkt des Fluggeräts 1 verläuft, insbesondere bei gleichzeitiger gleichmäßiger Betätigung aller Hubrotoren 5. Dadurch kann das Fluggerät 1 einen Schwebeflugzustand 40 ausführen. Für den Vortrieb des Fluggerätes 1 im Reiseflugzustand 41 kann ein Schubantrieb 9 am Heck vorgesehen sein. Ferner kann vorgesehen sein, dass die beiden Verbindungsstrukturen 46 an ihren Enden jeweils durch zwei weitere Verbindungselemente 47 miteinander verbunden sind, wobei die beiden weiteren Verbindungselemente 47 parallel zur Längsachse 50 des länglichen Rumpfes 13 und senkrecht zu den beiden Verbindungsstrukturen 46 orientiert sind.

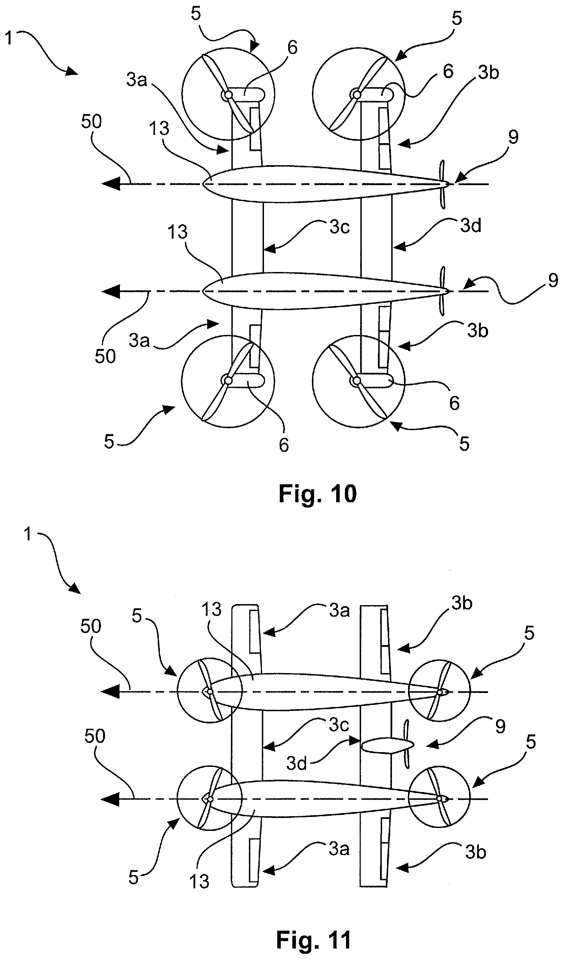

In Fig. 10 ist eine Draufsicht eines Fluggerätes 1 gezeigt, welches eine Tragestruktur 27 mit zwei zueinander parallel angeordneten länglichen Rümpfen 13 und zwei Paaren von Tragflächen 3a, 3b aufweist, an deren Enden jeweils eine Gondel 6 mit jeweils einem Hubrotor 5 angebracht ist. Durch die Hubrotoren 5 kann in einem Schwebeflugzustand 40 der benötigte Auftrieb erzeugt werden. Das erste Paar von Tragflächen 3a ist unter Berücksichtigung der Flugrichtung des Fluggerätes 1 vor dem zweiten Paar von Tragflächen 3b angeordnet. Ferner sind zwei in Flugrichtung versetzt zueinander angeordnete Tragflächen 3c, 3d zwischen den beiden Rümpfen 13 vorgesehen, die die beiden Rümpfe 13 miteinander verbinden. Die zwischen dem Rumpf 13 angeordneten Tragflächen 3c, 3d können ebenso wie die beiden Paare von Tragflächen 3a, 3b ein dynamischen Auftrieb erzeugendes Profil aufweisen. Alle Tragflächen des Fluggerätes 1 können dabei ungepfeilt sein, das heißt diese weisen keine Pfeilung auf. An jedem der beiden länglichen Rümpfe 13 kann bezogen auf die Flugrichtung im hinteren Bereich des Rumpfs 13, das heißt am Heck, ein Schubantrieb 9 zum Erzeugen des Vortriebs des Fluggerätes 1 im Reiseflugzustand 41 angebracht sein. Das bedeutet, es kann an jedem der beiden Rümpfe 13 am Heck ein Schubantrieb 9 vorgesehen sein, so dass die hier dargestellte Konfiguration zwei Schubantriebe 9 aufweist. An den beiden Paaren von Tragflächen 3a, 3b können Hochauftriebssysteme vorgesehen sein, zum Beispiel Landeklappen.

Fig. 11 zeigt ist eine Draufsicht eines Fluggerätes 1, welches eine Tragestruktur 27 mit zwei zueinander parallel angeordneten länglichen Rümpfen 13 und zwei Paaren von Tragflächen 3a, 3b aufweist. Ferner sind zwei in Flugrichtung versetzt zueinander angeordnete Tragflächen 3c, 3d zwischen den beiden Rümpfen 13 vorgesehen, die die beiden Rümpfe 13 miteinander verbinden. Die zwischen dem Rumpf 13 angeordneten Tragflächen 3c, 3d können ebenso wie die beiden Paare von Tragflächen 3a, 3b ein dynamischen Auftrieb erzeugendes Profil aufweisen. Die beiden länglichen Rümpfe 13 weisen jeweils zwei Hubrotoren 5 auf, die entlang der Längsachse 50 eines Rumpfes 13 versetzt zueinander angeordnet sind. Zum Beispiel ist ein jeweils ein Hubrotor 5 an den beiden Enden des länglichen Rumpfes 13 angebracht. Insgesamt können somit vier Hubrotoren 5 an dem Fluggerät 1 vorgesehen sein, die einen Auftrieb in einem Schwebeflugzustand 40 erzeugen. An einer der beiden zwischen dem Rumpf 13 angeordneten Tragflächen 3c, 3d kann ein Schubantrieb 9 vorgesehen sein, der einen Vortrieb im Reiseflugzustand erzeugt. Vorzugsweise ist der Schubantrieb 9 bezogen auf die Flugrichtung im hinteren Bereich, das heißt zwischen den beiden Hecks der Rümpfe 13 des Fluggerätes 1 an der Tragfläche 3d angebracht. Dabei ist der Schubantrieb 9 mittig zwischen den beiden Rümpfen 13 angebracht, um den Vortrieb möglichst gleichmäßig auf das Fluggerät 1 zu übertragen.

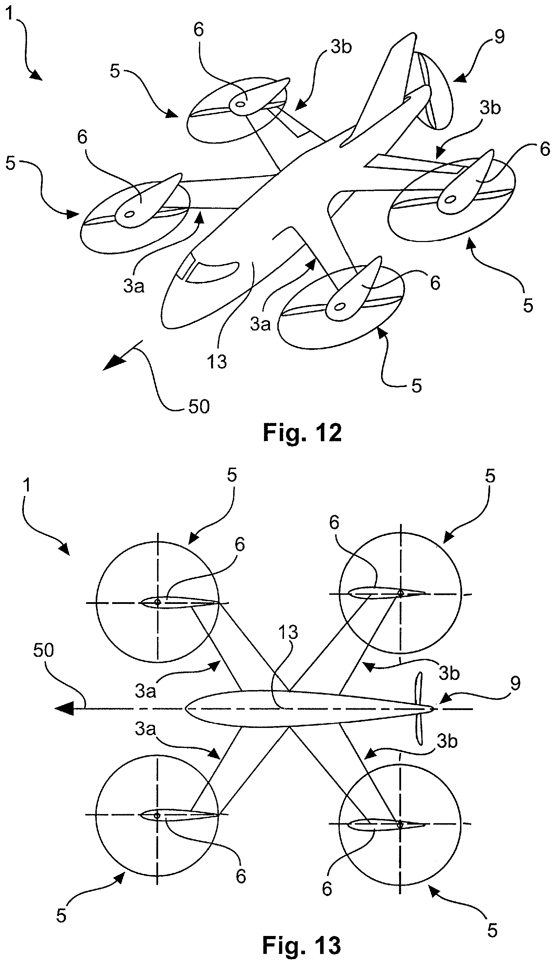

In Fig. 12 ist eine perspektivische Ansicht eines Fluggerätes 1 mit einer Tragestruktur 27 gezeigt, welche zwei Paare von Tragflächen 3a, 3b aufweist, wobei jedes der beiden Paare von Tragflächen 3a, 3b eine unterschiedliche Pfeilung aufweist. Dabei weist das bezogen auf die Flugrichtung vorn liegende Paar von Tragflächen 3a eine negative Pfeilung und das hinten liegende Paar von Tragflächen 3b weist eine positive Pfeilung auf, so dass bei einer Draufsicht, wie in Fig. 13 dargestellt, der Eindruck einer x-förmigen Anordnung der Tragflächen 3a, 3b entsteht. Jedoch sei angemerkt, dass die beiden Paare von Tragflächen 3a, 3b nicht zwingend dieselbe Spannweite oder Flügelstreckung aufweisen müssen. Beispielsweise hat das hintere Paar von Tragflächen 3b eine größere Spannweite als das vordere Paar von Tragflächen 3a, um so eine höhere aerodynamische Effizienz zu erzielen. Ebenso kann die Flügelfläche des hinteren Paares von Tragflächen 3b größer sein als die des vorderen Paares von Tragflächen 3a und umgekehrt. An den Enden einer jeden Tragfläche 3a, 3b kann eine Gondel 6 mit jeweils einem Hubrotor 5 angebracht sein, so dass bei gleichzeitiger und gleichmäßiger Betätigung aller Hubrotoren 5 die von ihnen erzeugten Auftriebskräfte in etwa durch den Schwerpunkt des Fluggeräts 1 verläuft. Die Gondeln 6 mit den Hubrotoren 5 müssen jedoch nicht zwingend an den Enden der Tragflächenpaare 3a, 3b angeordnet sein. Sie können an jeder Position auf oder unter den Tragflächenpaaren 3a, 3b, beispielsweise auch in Rumpfnähe, vorgesehen sein. Die Tragestruktur 27 weist ferner einen länglichen Rumpf 13 auf, an dem die beiden Paare von Tragflächen 3a, 3b angebracht sind, so dass der für einen Schwebeflugzustand 40 benötigte Auftrieb erzeugt werden kann. Ein Schubantrieb 9 ist im Heckbereich des Fluggerätes 1 angebracht, um einen Vortrieb in einem Reiseflugzustand 41 zu erzeugen. Die Tragflächen 3a, 3b können bezogen auf eine Hochachse oder Gierachse des Fluggerätes 1 im oberen Bereich des Rumpfes 13 angebracht sein, so dass beim Bodenbetrieb des Fluggerätes 1 ein größerer Abstand zwischen dem Boden und den Tragflächen 3a, 3b zur Verfügung steht. Hierdurch können die Hubrotoren 5 auch unterhalb der Tragflächen 3a, 3b angeordnet sein. Die Tragflächen 3a, 3b können zudem anhedral ausgerichtet sein. Unter anhedral versteht der Fachmann im Flugzeugbau eine negative V-Stellung der Tragflächen 3a, 3b bei Blickrichtung in Längsrichtung 50 des Rumpfes 13 oder in Flugrichtung. Das heißt die Tragflächen 3a, 3b senken sich bezogen auf die Hochachse des Fluggerätes 1 ausgehend vom Rumpf 13 zu ihren Enden hin ab. Durch eine negative V-Stellung kann insbesondere die Manövrierfähigkeit des Fluggerätes 1 erhöht werden. Sowohl negative V-Stellung als auch positive V-Stellung der Tragflächen können in allen zuvor und im Folgenden beschriebenen Ausführungsformen vorgesehen sein. Bei der positiven V-Stellung steigen die Tragflächen 3 bezogen auf die Hochachse des Fluggerätes 1 ausgehend vom Rumpf 13 zu ihren Enden auf, sodass sich bei einer Blickrichtung in Längsrichtung 50 der Eindruck einer V-Form der Tragflächen 3 ergibt. Es ist möglich, dass das vordere Paar von Tragflächen 3a eine im Vergleich zum hinteren Paar von Tragflächen 3b unterschiedliche Spannweite aufweist. Dadurch kann bei geeigneter Anordnung der Tragflächen eine höhere aerodynamische Effektivität erzielt werden. Beispielsweise hat der vordere Paar von Tragflächen 3a eine geringere Spannweite als das hintere Paar von Tragflächen 3b. Zudem kann das vordere Paar von Tragflächen 3a entlang der Hochachse des Fluggerätes 1 in unterschiedlicher Höhe am Rumpf 13 vorgesehen sein. Beispielsweise ist das vordere Paar von Tragflächen 3a in Bezug auf die Hochachse höher am Rumpf 13 angeordnet als das hintere Paar von Tragflächen 3b, wodurch bei einer möglichen Ablösung der Strömung am vorderen Paar von Tragflächen 3a das hintere Paar von Tragflächen 3b weiterhin Auftrieb erzeugt, so dass das Fluggerät 1 einen aerodynamisch oder flugmechanisch stabilen Flug auszuführen vermag.

In allen Ausführungsbeispielen mit einer Tandemflügelstruktur, d. h. mit zwei Paaren von Tragflächen, können das erste Paar von Tragflächen 3a und das zweite Paar von Tragflächen eine unterschiedliche Flügelfläche aufweisen. Unter Flügelfläche versteht der Fachmann im Flugzeugbau diejenige Fläche, die durch den Flügelgrundriss, zum Beispiel in einer Draufsicht, beschrieben wird.

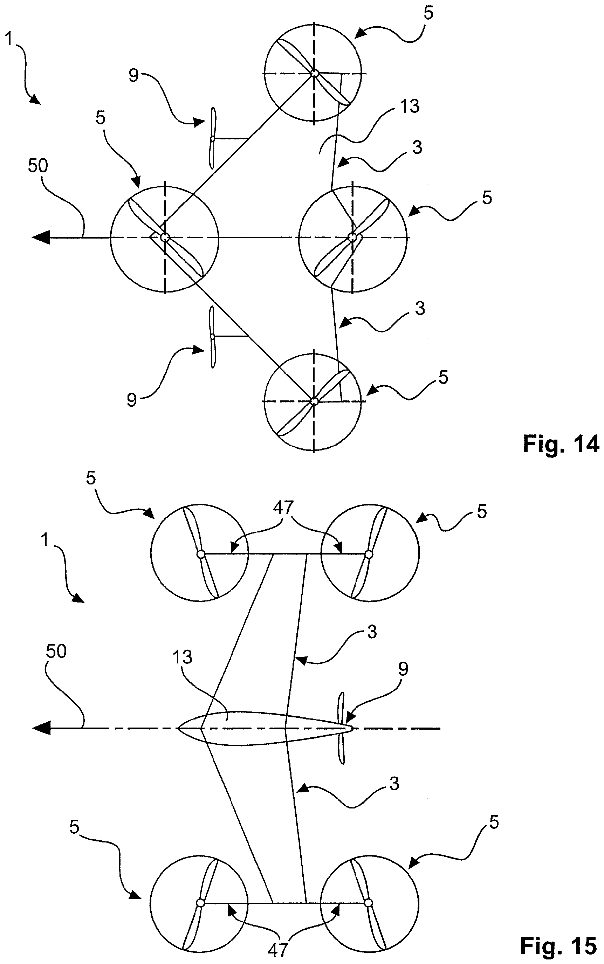

Fig. 14 zeigt eine Draufsicht eines Fluggerätes 1, bei dem der Rumpf 13 gleichzeitig die Tragflächen 3 darstellt. Das heißt, der Rumpf 1 ist in die Tragflächen 3 integriert. Eine solche Ausführung wird auch als Nurflüglerkonfiguration bezeichnet. Der Rumpf 13 bzw. die Tragflächen 3 weisen bei Draufsicht auf das Fluggerät 1 eine sogenannte Delta-Form oder Dreiecksform auf. Mit anderen Worten ist die Hinterkantenpfeilung der Tragflächen 3 deutlich kleiner als die Vorderkantenpfeilung. Es können am Rumpf 13 bzw. an den Tragflächen 3 vier Hubrotoren 5 vorgesehen sein, die derart angeordnet sind, dass das Fluggerät 1 in einen Schwebeflugzustand 40 gebracht werden kann. Dabei ist ein Hubrotor 5 an einer vorderen Spitze und ein Hubrotor 5 an einer hinteren Kante des Rumpfes 13 angebracht. Zwei weitere Hubrotoren 5 sind in eine Spannweitenrichtung der Tragflächen 3 bzw. Querrichtung 60 zur Flugrichtung jeweils an den beiden Tragflächenenden angebracht. Um das Fluggerät 1 während des Schwebeflugzustandes 40 im Gleichgewicht zu halten, können die Hubrotoren 5 verschieden stark betätigt werden. Mit anderen Worten kann der Schub jeder der Hubrotoren 5 individuell eingestellt werden, so dass neben dem Ermöglichen eines Gleichgewichtszustandes im Schwebeflug auch ein Kippen des Fluggerätes 1, zum Beispiel um die Längsrichtung 50 oder um eine Querachse 60 des Fluggerätes 1, möglich ist. Ferner kann an jeder der Tragflächen 3 jeweils ein Schubantrieb 9 vorgesehen sein, wobei die Schubantriebe 9 an den jeweiligen Vorderkanten der Tragflächen 3 angebracht sind. Jedoch können die Schubantriebe 9 auch an den jeweiligen Hinterkanten der Tragflächen 3 angebracht sein. Die Schubantriebe 9 sind jedenfalls derart angeordnet, dass ein Vortrieb in Längsrichtung 50 des Fluggerätes 1 erzeugt wird.

In Fig. 15 ist eine Draufsicht eines Fluggerätes 1 mit einer Tragestruktur 27 gezeigt, wobei die Tragestruktur 27 einen länglichen Rumpf 13, ein Paar von Tragflächen 3 sowie Verbindungselemente 47 aufweist. Die Verbindungselemente 47 sind beispielsweise als stangenförmige Elemente oder balkenförmige Elemente an den Enden der Tragflächen 3 des Paares von Tragflächen 3 angebracht und parallel zur Längsrichtung 50 oder parallel zum länglichen Rumpf 13 des Fluggerätes 1 ausgerichtet. An den Verbindungselementen 47, das heißt an den stangenförmigen Elementen, sind jeweils zwei Hubrotoren 5 in Längsrichtung 50 versetzt zueinander angebracht. Somit erzeugen vier Hubrotoren 5 den entsprechenden Auftrieb für einen Schwebeflugzustand 40. Am Rumpf 13 ist ein Schubantrieb 9 für den Vortrieb des Fluggerätes 1 im Reiseflug 41 angebracht.

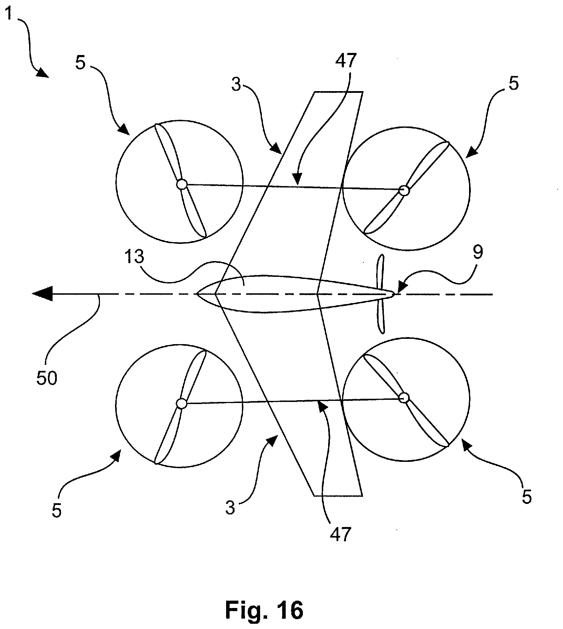

Wie in Fig. 16 dargestellt, können die Verbindungselemente 47 anstatt an den Enden der Tragflächen 3 auch etwa mittig an jeder der Tragflächen 3 angebracht sein. Mit anderen Worten ist ein erstes Verbindungselement 47 zum Beispiel parallel zur Längsrichtung 50 oder parallel zum länglichen Rumpf 13 etwa mittig zwischen dem Rumpf 13 und dem Ende der ersten Tragfläche des Paares von Tragflächen 3 derart angebracht, dass ein erstes Ende des ersten Verbindungselements 47 über die Vorderkante der ersten Tragfläche 3 und ein zweites Ende des ersten Verbindungselements 47 über die Hinterkante der ersten Tragfläche 3 hinausragt. In entsprechender Weise ist ein zweites Verbindungselement 47 parallel zur Längsrichtung 50 oder parallel zum länglichen Rumpf 13 etwa mittig zwischen dem Rumpf 13 und dem Ende der zweiten Tragfläche 3 des Paares von Tragflächen 3 derart angebracht, dass ein erstes Ende des zweiten Verbindungselements 47 über die Vorderkante der zweiten Tragfläche 3 und ein zweites Ende des zweiten Verbindungselements 47 über die Hinterkante der zweiten Tragfläche 3 hinausragt. An den Verbindungselementen 47, das heißt an den stangenförmigen oder balkenförmigen Elementen, sind jeweils zwei Hubrotoren 5 in Längsrichtung 50 versetzt zueinander angebracht. Diese Hubrotoren 5 sind dabei zum Beispiel an den jeweiligen über die Tragflächen 3 hinausragenden Enden der beiden Verbindungselemente 47 angebracht, so dass sich die Hubrotoren 5 nicht oberhalb der Tragflächen 3 befinden, sondern entlang der Längsrichtung 50 des Rumpfes 13 über diese hinausragen. Der Bereich oberhalb der Tragflächen 3 beschreibt dabei den Bereich über den Tragflächen 3 in Bezug auf die im Flugzeugbau üblicherweise verwendete Hochachse.

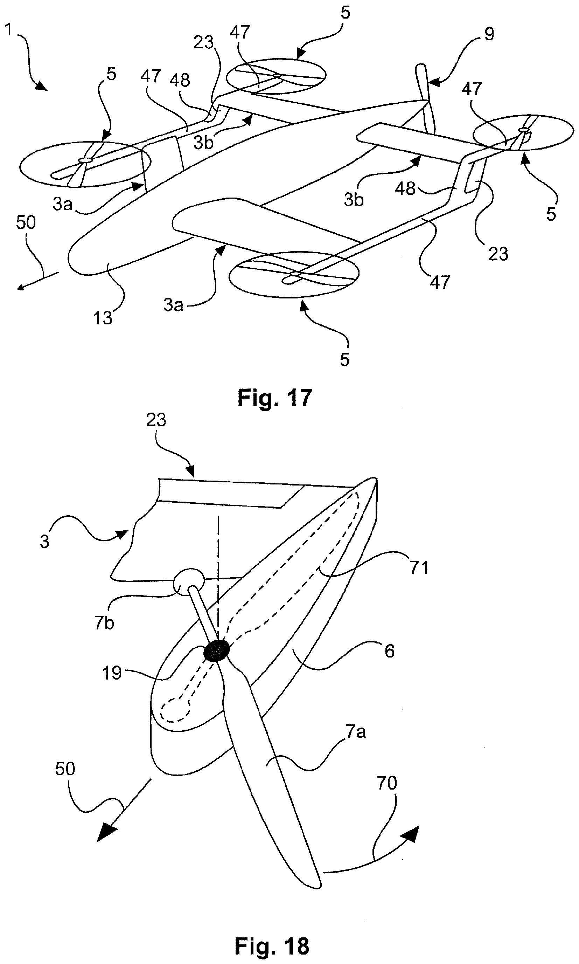

Fig. 17 zeigt eine perspektivische Ansicht eines Fluggerätes 1 mit einer Tragestruktur 27, umfassend einen Rumpf 13, zwei in Längsrichtung 50 hintereinander angeordnete Paare von Tragflächen 3a, 3b sowie zwei parallel zur Längsrichtung 50 angeordnete längliche bzw. stangenförmige Verbindungselemente 47. Das bezüglich der Flugrichtung oder Längsrichtung 50 im vorderen Bereich des länglichen Rumpfes 13 angebrachte Paar von Tragflächen 3a weist eine positive Pfeilung auf, wohingegen das im hinteren Bereich des länglichen Rumpfes 13 angebrachte Paar von Tragflächen 3b keine oder im Vergleich zur Pfeilung des im vorderen Bereich des Rumpfes 13 angebrachten Paares von Tragflächen 3a eine kleinere Pfeilung aufweist. Beispielsweise ist die Pfeilung des ersten Paares von Tragflächen 3a zwischen 20 und 30 Grad. Die Paare von Tragflächen 3a, 3b können bezüglich der Hochachse des Fluggerätes 1 in unterschiedlichen Höhen am Rumpf 13 angebracht sein. Mit anderen Worten bedeutet dies, dass für einen Beobachter, dessen Blickrichtung die Längsrichtung 50 oder die Flugrichtung des Fluggerätes 1 ist, das erste Paar von Tragflächen 3a unter dem zweiten Paar von Tragflächen 3b angeordnet ist. Die Tragflächen der beiden Paare von Tragflächen 3a, 3b sind also entlang der Hochachse des Fluggerätes 1 versetzt angeordnet. Es sind vier Verbindungselemente 47 an den jeweiligen Enden der Tragflächen 3a, 3b angebracht, die sich parallel zur Längsrichtung 50 des Rumpfes 13 erstrecken. Da die Tragflächen 3a, 3b auf einer ersten Rumpfseite, beispielsweise der linken Rumpfseite, in unterschiedlichen Höhen entlang der Hochachse am Rumpf 13 angebracht sind, befinden sich auch die Verbindungselemente 47 die an den Enden der Tragflächen 3a, 3b der linken Rumpfseite angebracht sind, in unterschiedlichen Höhen. Dabei kann ein Verbindungsstück 48 vorgesehen sein, welches die Verbindungselemente 47 auf einer Rumpfseite miteinander verbindet. Das Verbindungsstück 48 kann ein plattenförmiges oder scheibenförmiges Bauteil sein, das insbesondere ein Leitwerk 23, wie beispielsweise das Seitenleitwerk des Fluggerätes 1 umfasst. Der in Bezug auf die Hochachse entstehende Höhenunterschied der beiden Tragflächenpaare 3a, 3b kann dabei durch das Vorsehen des Verbindungsstückes 48 zur Unterbringung des Seitenleitwerks überbrückt. An den Verbindungselementen 47 sind jeweils wiederum Hubrotoren 5 angebracht. An jedem der vier Verbindungselemente 47 ist ein Hubrotor 5 angebracht. Auf beiden Seiten des länglichen Rumpfes 13 sind somit zwei Hubrotoren 5 in Längsrichtung 50 versetzt zueinander derart positioniert und ausgerichtet, dass eine Summe der von ihnen erzeugten Auftriebskräfte in etwa durch einen Schwerpunkt des Fluggeräts 1 verläuft, insbesondere bei gleichzeitiger gleichmäßiger Betätigung aller Hubrotoren 5. Zudem ist im Heckbereich des länglichen Rumpfes 13 ein Schubantrieb 9 zur Erzeugung des Vortriebs des Fluggerätes 1 vorgesehen.

Fig. 18 zeigt eine perspektivische Ansicht einer länglich geformten Gondel 6 mit einem Einblattpropeller 7a. Der Darstellung ist ebenfalls eine Drehrichtung 70 des Einblattpropellers 7a zu entnehmen. Der Einblattpropeller 7a weist an einem über seine Rotorachse 19 hinausragenden Ende ein Massestück 7b auf, welches als Gegenmasse zu dem Einblattpropeller wirkt. Der Einblattpropeller 7a weist somit einen ersten Abschnitt zwischen dem Massestück 7b und der Rotorachse 19 und einen zweiten Abschnitt zwischen dem Ende des Blattes des Einblattpropellers 7a und der Rotorachse 19 auf. Beide Abschnitte des Einblattpropellers 7a befinden sich also auf unterschiedlichen Seiten der Rotorachse 19. Der erste Abschnitt des Einblattpropellers 7a misst in seiner Länge beispielsweise zwischen einem Viertel und einem Drittel der Gesamtlänge des Einblattpropellers 7a, wohingegen der zweite Abschnitt des Einblattpropellers 7a in seiner Länge zwischen zwei Drittel und drei Viertel der Gesamtlänge des Einblattpropellers 7a misst. Der Einblattpropeller 7a kann zum Beispiel ein Teil eines Hubrotors 5 des Fluggerätes 1 sein, der zum Auftrieb des Fluggerätes 1 für einen Schwebeflugzustand 40 beiträgt. Der Einblattpropeller 7a kann für einen Reiseflugzustand 41 in eine zur länglich geformten Gondel 6 parallele Ausrichtung gebracht werden, sodass der Einblattpropeller 7a stillstehend im Wesentlichen parallel zur Flugrichtung oder zur Längsrichtung 50 des Fluggerätes 1 ausgerichtet ist. Der Einblattpropeller 7a und die Gondel 6 sind dann fluchtend zueinander ausgerichtet, was den Luftwiderstand während des Reisefluges des Fluggerätes 1 vermindert. Die Gondel 6 kann wiederum an einem Ende einer Tragfläche 3 angebracht sein. Während des Reiseflugs kann der Auftrieb durch eine mit einem dynamischen Auftrieb erzeugenden Profil versehene Tragfläche 3 erzeugt werden. Der Vortrieb wird dabei durch einen in Fig. 18 nicht dargestellten Schubantrieb gewährleistet.

Es können ferner zwei Propeller übereinander angeordnet werden. Dies gilt sowohl für Einblattpropeller als auch für Zweiblattpropeller oder Mehrblattpropeller. Der untere Propeller kann sich zum Beispiel während des Schwebeflugzustandes in die gleiche und/oder auch in die entgegengesetzte Drehrichtung wie der darüber liegende Propeller drehen. Durch eine gegensinnige Drehrichtung kann der Drall verringert werden. Zwei übereinander angeordnete Propeller mit jeweils eigenem Motor können ebenfalls vorgesehen sein, wodurch die Redundanz und damit die Sicherheit erhöht werden kann. Falls ein Motor ausfällt, könnte das Fluggerät 1 immer noch schweben. In einem weiteren Ausführungsbeispiel kann vorgesehen sein, dass die Propeller hinter einer aerodynamischen Verkleidung, zum Beispiel durch Einfahren in die Gondel 6 verstaut werden können, so dass der Widerstand weiter reduziert werden kann. Dafür können zum Beispiel Klappen an den Gondeln 6 vorgesehen sein, die nach dem Einfahren des Propellers in die Gondeln 6 verschlossen werden können.

In einem weiteren Ausführungsbeispiel kann der Propeller gelenkig gelagert werden. Dies kann insbesondere beim Vorwärtsflug des Fluggerätes 1 von Vorteil sein, da hierdurch keine Rollmomente durch asymmetrische Anströmung der Propeller auf das Fluggerät 1 übertragen werden. Zudem würden entstehende Biegemomente im Blatt des Propellers die Motornabe weniger belasten, da die Biegemomente im Blatt verbleiben würden. Dies trifft sowohl für einen Zweiblattpropeller als auch für einen Einblattpropeller zu.

Ausführungsformen des vorgeschlagenen Fluggeräts 1 können mit einer sehr leichtgewichtigen Struktur, insbesondere im Vergleich zu herkömmlichen senkrechtstartfähigen Fluggeräten, ausgebildet werden und gleichzeitig die Möglichkeit hoher Reisefluggeschwindigkeiten eröffnen. Die Multicopter-artige Ausgestaltung mit mehreren Hubrotoren kann einen einfachen und effizienten Schwebeflugmodus ermöglichen. Außerdem kann einfach von einem vertikalen in einen horizontalen Flugmodus übergegangen werden. Die hierzu vorgesehenen Steuerungen und Steueralgorithmen können verhältnismäßig einfach gestaltet sein. Das vorgeschlagene Fluggerätkonzept kann mit einfachen, kostengünstigen und robusten Antriebsmotoren und Leistungsübertragungsmechanismen implementiert werden. Beispielsweise können die Hubrotoren mit einfachen, nur in ihrer Drehzahl zu regelnden Elektromotoren betrieben werden. Der Schubantrieb kann mit einem einfachen Motor beliebigen Typs angetrieben werden und kann im Vergleich zu herkömmlichen Flugzeugen eine wesentlich geringere Leistungsfähigkeit besitzen, da insbesondere die beim Start eines Flugzeugs erforderlichen Maximalschübe in Horizontalrichtung nicht geleistet werden brauchen. Insgesamt kann das vorgeschlagene Fluggerät eine hohe Nutzlastkapazität aufweisen.

## Patentansprüche

1. Fluggerät (1), aufweisend:
eine Tragestruktur (27);
eine Flügelstruktur (15);
wenigstens drei Hubrotoren (5);
wenigstens einen Schubantrieb (9);
wobei die Flügelstruktur (15) an der Tragestruktur (27) befestigt ist oder Teil der Tragestruktur (27) ist;
wobei die Flügelstruktur (15) dazu ausgebildet ist, bei einer Horizontalbewegung des Fluggeräts (1) eine Auftriebskraft für das Fluggerät zu erzeugen und hierfür wenigstens eine Tragfläche (3) aufweist, die mit einem dynamischen Auftrieb erzeugenden Profil versehen ist, wobei die wenigstens eine Tragfläche der Flügelstruktur derart dimensioniert ist, dass sie bei von dem Fluggerät zu erzielenden Reisefluggeschwindigkeiten alleine für einen ausreichenden Auftrieb für das Fluggerät sorgen kann;
wobei jeder der Hubrotoren (5) an der Tragestruktur (27) befestigt ist, einen Propeller (7) aufweist und dazu ausgebildet sind, durch Rotieren des Propellers (7) eine in Vertikalrichtung wirkende Auftriebskraft (F1, F2, F3, F4) für das Fluggerät (1) zu erzeugen;
wobei der Propeller (7) exakt zwei Propellerblätter (29) aufweist,
wobei die Hubrotoren (5) dazu ausgebildet sind, jeweilige Propellerblätter (29) eines Hubrotors (5) in einer Position relativ zu der Tragestruktur (27) zu arretieren,
wobei der Propeller derart in einer Rotationsposition arretierbar ist, dass sich der Propeller (7) parallel zu einer Längsrichtung des Fluggeräts erstreckt,
und
wobei der Schubantrieb (9) dazu ausgebildet ist, eine in Horizontalrichtung wirkende Schubkraft (F5) auf die Tragestruktur (27) zu erzeugen.

2. Fluggerät nach Anspruch 1,
wobei die Tragestruktur (27) zusammen mit der Flügelstruktur (15) als Tandemflügelstruktur mit einem länglichen Rumpf (13) und zwei in Horizontalrichtung hintereinander angeordneten Paaren von von dem Rumpf (13) quer abragenden Tragflächen (3) ausgebildet ist.

3. Fluggerät nach Anspruch 2,
wobei an jeder der Tragflächen (3) ein Leitwerk (21, 23) angeordnet ist.

4. Fluggerät nach einem der Ansprüche 1 bis 3,
wobei die Hubrotoren (5) derart ausgebildet sind, dass eine Rotationsebene, in der Propellerblätter (29) eines Hubrotors (5) rotieren, in Relation zu einer von einem Motor angetriebenen Rotorachse (19) des Hubrotors (5) stationär ist.

5. Fluggerät nach einem der Ansprüche 1 bis 4,
wobei Propellerblätter (29) des Hubrotors (5) derart verschwenkbar mit der Rotorachse (19) verbunden sind, dass eine Steigung der Propellerblätter (29) variiert werden kann.

6. Fluggerät nach einem der Ansprüche 1 bis 5,
wobei eine Summe der von den Hubrotoren erzeugbaren Auftriebskräfte (F1, F2, F3, F4) im Wesentlichen durch einen Schwerpunkt des Fluggeräts (1) führt;
wobei ein Neutralpunkt der Flügelstruktur (15) relativ zu dem Schwerpunkt des Fluggeräts (1) geeignet für einen Horizontalflug positionierbar ist.

7. Fluggerät nach einem der Ansprüche 1 bis 6,
wobei die Hubrotoren (5) und der Schubantrieb (9) durch unabhängig voneinander ansteuerbare Motoren (31, 35) angetrieben werden.

8. Fluggerät nach einem der vorhergehenden Ansprüche,
wobei die wenigstens eine Tragfläche (3) schwenkbar um eine Drehachse (42) an der Tragestruktur (27) angebracht ist.

9. Fluggerät nach Anspruch 8,
wobei eine zweite Tragfläche (3) schwenkbar um die Drehachse (42) an der Tragestruktur (27) angebracht ist, und
wobei sich die wenigstens eine Tragfläche (3) und die zweite Tragfläche (3) für einen Schwebeflug in einem verschwenkten Zustand befinden.

10. Fluggerät nach Anspruch 9,
wobei sich die wenigstens eine Tragfläche (3) und die zweite Tragfläche (3) für einen Reiseflug in einem eingeschwenkten Zustand befinden, bei dem Vorderkanten (45) der Tragflächen (3) fluchtend zueinander ausgerichtet sind.

11. Fluggerät nach einem der vorhergehenden Ansprüche,
wobei die Tragestruktur (27) zusammen mit der Flügelstruktur (15) als Tandemflügelstruktur mit einem länglichen Rumpf (13) und zwei in Horizontalrichtung hintereinander angeordneten Paaren von von dem Rumpf (13) abragenden Tragflächen (3) ausgebildet ist.

12. Fluggerät nach Anspruch 11,
wobei das erste Paar von Tragflächen (3a) eine erste Pfeilung aufweist, die sich von einer zweiten Pfeilung des zweiten Paares von Tragflächen (3b) unterscheidet.

13. Fluggerät nach einem der Ansprüche 12 bis 12,
wobei das erste Paar von Tragflächen (3a) und das zweite Paar von Tragflächen (3b) durch wenigstens eine Verbindungsstruktur (46) verbunden sind;
wobei die wenigstens eine Verbindungsstruktur (46) eine längliche Form aufweist und parallel zum länglichen Rumpf (13) ausgerichtet ist, und
wobei die wenigstens eine Verbindungsstruktur (46) ein Leitwerk (23) aufweist.

14. Fluggerät nach einem der Ansprüche 11 bis 13,
wobei das erste Paar von Tragflächen (3) und das zweite Paar von Tragflächen (3) in einer Vertikalrichtung versetzt zueinander angeordnet sind.

## Claims

1. Aircraft (1) having:
a load-bearing structure (27);
a wing structure (15);
at least three lift rotors (5);
at least one propulsion drive (9);
wherein the wing structure (15) is fastened to the load-bearing structure (27) or is part of the load-bearing structure (27);
wherein the wing structure (15) is configured to generate a lifting force for the aircraft during a horizontal movement of the aircraft (1) and has, for this purpose, at least one aerofoil (3) that is provided with a profile generating dynamic lift, wherein the at least one aerofoil of the wing structure is dimensioned such that, at cruise speeds to be achieved by the aircraft, it alone can ensure sufficient lift for the aircraft;
wherein each of the lift rotors (5) is fastened to the load-bearing structure (27), has a propeller (7) and is configured to create a lifting force (F1, F2, F3, F4), acting in the vertical direction, for the aircraft (1) by rotation of the propeller (7);
wherein the propeller (7) has exactly two propeller blades (29);
wherein the lift rotors (5) are configured to lock respective propeller blades (29) of a lift rotor (5) in a position relative to the load-bearing structure (27),
wherein the propeller is lockable in a rotation position such that the propeller (7) extends parallel to a longitudinal direction of the aircraft,
and
wherein the propulsion drive (9) is configured to generate a propulsion force (F5), acting in a horizontal direction, on the load-bearing structure (27) .

2. Aircraft according to Claim 1,
wherein the load-bearing structure (27), together with the wing structure (15), is configured as a tandem wing structure having an elongate fuselage (13) and two pairs of aerofoils (3), arranged one behind the other in the horizontal direction, protruding transversely from the fuselage (13).

3. Aircraft according to Claim 2,
wherein steering gear (21, 23) is arranged on each of the aerofoils (3).

4. Aircraft according to one of Claims 1 to 3,
wherein the lift rotors (5) are configured such that a rotation plane in which propeller blades (29) of a lift rotor (5) rotate is stationary relative to a rotor shaft (19), driven by a motor, of the lift rotor (5).

5. Aircraft according to one of Claims 1 to 4,
wherein propeller blades (29) of the lift rotor (5) are connected to the rotor shaft (19) in a pivotable manner such that a pitch of the propeller blades (29) can be varied.

6. Aircraft according to one of Claims 1 to 5,
wherein a sum of the lifting forces (F1, F2, F3, F4) able to be generated by the lift rotors passes substantially through a centre of gravity of the aircraft (1),
wherein a neutral point of the wing structure (15) is positionable relative to the centre of gravity of the aircraft (1) in a suitable manner for horizontal flight.

7. Aircraft according to one of Claims 1 to 6,
wherein the lift rotors (5) and the propulsion drive (9) are driven by motors (31, 35) that are actuable independently of one another.

8. Aircraft according to one of the preceding claims, wherein the at least one aerofoil (3) is attached to the load-bearing structure (27) so as to be pivotable about an axis of rotation (42).

9. Aircraft according to Claim 8,
wherein a second aerofoil (3) is attached to the load-bearing structure (27) so as to be pivotable about the axis of rotation (42), and
wherein the at least one aerofoil (3) and the second aerofoil (3) are in a pivoted state for hovering.

10. Aircraft according to Claim 9,
wherein the at least one aerofoil (3) and the second aerofoil (3) are in a pivoted-in state for cruising, in which front edges (45) of the aerofoils (3) are oriented in a manner aligned with one another.

11. Aircraft according to one of the preceding claims, wherein the load-bearing structure (27), together with the wing structure (15), is configured as a tandem wing structure having an elongate fuselage (13) and two pairs of aerofoils (3), arranged one behind the other in the horizontal direction, protruding from the fuselage (13).

12. Aircraft according to Claim 11,
wherein the first pair of aerofoils (3a) has a first sweep, which differs from a second sweep of the second pair of aerofoils (3b).

13. Aircraft according to one of Claims 12 to 12,
wherein the first pair of aerofoils (3a) and the second pair of aerofoils (3b) are connected by at least one connecting structure (46);
wherein the at least one connecting structure (46) has an elongate shape and is oriented parallel to the elongate fuselage (13); and
wherein the at least one connecting structure (46) has steering gear (23).

14. Aircraft according to one of Claims 11 to 13,
wherein the first pair of aerofoils (3) and the second pair of aerofoils (3) are arranged in a manner offset from one another in a vertical direction.

## Revendications

1. Aéronef (1), comprenant :
une structure de support (27) ;
une structure d'ailes (15) ;
au moins trois rotors de sustentation (5) ;
au moins un entraînement de poussée (9) ;
dans lequel la structure d'ailes (15) est fixée à la structure de support (27) ou fait partie de la structure de support (27) ;
dans lequel la structure d'ailes (15) est conçue pour, lors d'un déplacement horizontal de l'aéronef (1), produire une force de sustentation pour l'aéronef et comprend à cet effet au moins une surface portante (3) qui est dotée d'un profil produisant une sustentation dynamique, dans lequel l'au moins une surface portante de la structure d'ailes est dimensionnée de telle sorte qu'elle peut provoquer à elle seule une sustentation suffisante pour l'aéronef dans le cas de vitesses de croisière à atteindre par l'aéronef ;
dans lequel chacun des rotors de sustentation (5) est fixé à la structure de support (27), comprend une hélice (7) et est conçu pour produire, par rotation de l'hélice (7), une force de sustentation (F1, F2, F3, F4) agissant dans la direction verticale pour l'aéronef (1) ;
dans lequel l'hélice (7) comprend exactement deux pales d'hélice (29), dans lequel les rotors de sustentation (5) sont conçus pour bloquer des pales d'hélice (29) respectives d'un rotor de sustentation (5) dans une position par rapport à la structure de support (27) ;
dans lequel l'hélice peut être bloquée dans une position en rotation de telle sorte que l'hélice (7) s'étende parallèlement à une direction longitudinale de l'aéronef, et
dans lequel l'entraînement de poussée (9) est conçu pour produire une force de poussée (F5) agissant dans la direction horizontale sur la structure de support (27).

2. Aéronef selon la revendication 1,
dans lequel la structure de support (27) est réalisée, conjointement avec la structure d'ailes (15), sous forme de structure d'ailes en tandem comprenant un fuselage allongé (13) et deux paires, disposées l'une derrière l'autre dans la direction horizontale, de surfaces portantes (3) faisant saillie transversalement à partir du fuselage (13).

3. Aéronef selon la revendication 2,
dans lequel un empennage (21, 23) est disposé sur chacune des surfaces portantes (3).

4. Aéronef selon l'une des revendications 1 à 3,
dans lequel les rotors de sustentation (5) sont réalisés de telle sorte qu'un plan de rotation, dans lequel des pales d'hélice (29) d'un rotor de sustentation (5) tournent, soit stationnaire par rapport à un axe de rotor (19), entraîné par un moteur, du rotor de sustentation (5).

5. Aéronef selon l'une des revendications 1 à 4,
dans lequel des pales d'hélice (29) du rotor de sustentation (5) sont reliées de manière pivotante à l'axe de rotor (19), de telle sorte qu'un pas des pales d'hélice (29) puisse être modifié.

6. Aéronef selon l'une des revendications 1 à 5,
dans lequel une somme des forces de sustentation (F1, F2, F3, F4) pouvant être produites par les rotors de sustentation passe sensiblement par le centre de gravité de l'aéronef (1) ;
dans lequel un point neutre de la structure d'ailes (15) peut être positionné par rapport au centre de gravité de l'aéronef (1) de manière appropriée pour un vol en palier.

7. Aéronef selon l'une des revendications 1 à 6,
dans lequel les rotors de sustentation (5) et l'entraînement de poussée (9) sont entraînés par des moteurs (31, 35) pouvant être commandés indépendamment l'un de l'autre.

8. Aéronef selon l'une des revendications précédentes, dans lequel l'au moins une surface portante (3) est montée sur la structure de support (27) de manière pivotante autour d'un axe de rotation (42).

9. Aéronef selon la revendication 8,
dans lequel une deuxième surface portante (3) est montée sur la structure de support (27) de manière pivotante autour de l'axe de rotation (42), et
dans lequel l'au moins une surface portante (3) et la deuxième surface portante (3) se trouvent dans un état pivoté pour un vol stationnaire.

10. Aéronef selon la revendication 9,
dans lequel l'au moins une surface portante (3) et la deuxième surface portante (3) se trouvent dans un état pivoté vers l'intérieur pour un vol de croisière, état dans lequel des bords d'attaque (45) des surfaces portantes (3) sont orientés en alignement les uns par rapport aux autres.

11. Aéronef selon l'une des revendications précédentes, dans lequel la structure de support (27) est réalisée, conjointement avec la structure d'ailes (15), sous forme de structure d'ailes en tandem comprenant un fuselage allongé (13) et deux paires, disposées l'une derrière l'autre dans la direction horizontale, de surfaces portantes (3) faisant saillie à partir du fuselage (13).

12. Aéronef selon la revendication 11,
dans lequel la première paire de surfaces portantes (3a) présente une première flèche qui diffère d'une deuxième flèche de la deuxième paire de surfaces portantes (3b).

13. Aéronef selon l'une des revendications 12 à 12,
dans lequel la première paire de surfaces portantes (3a) et la deuxième paire de surfaces portantes (3b) sont reliées par au moins une structure de liaison (46) ;
dans lequel l'au moins une structure de liaison (46) présente une forme allongée et est orientée parallèlement au fuselage allongé (13), et
dans lequel l'au moins une structure de liaison (46) comprend un empennage (23).

14. Aéronef selon l'une des revendications 11 à 13,
dans lequel la première paire de surfaces portantes (3) et la deuxième paire de surfaces portantes (3) sont disposées de manière décalée l'une par rapport à l'autre dans une direction verticale.
